# EUROPEAN PATENT SPECIFICATION

(11) **EP 4 625 885 B1**
(45) Date of publication and mention of the grant of the patent: **30.09.2026**
(21) Application number: 23942888.1
(22) Date of filing: 29.06.2023
(51) Int. Cl.: H04L 9/40, H04W 12/06, H04L 9/32, G06F 21/00

(54) **TERMINAL AUTHENTICATION METHOD AND APPARATUS, ACCESS DEVICE AND MEDIUM**
VERFAHREN UND VORRICHTUNG ZUR AUTHENTIFIZIERUNG EINES ENDGERÄTS, ZUGANGSVORRICHTUNG UND MEDIUM
PROCÉDÉ ET APPAREIL D'AUTHENTIFICATION DE TERMINAL, DISPOSITIF D'ACCÈS ET SUPPORT

(43) Date of publication of application: 01.10.2025
(73) Proprietor: New H3C Technologies Co., Ltd., Hangzhou, Zhejiang 310052 (CN)
(72) Inventor: YIN, Jianzhong, Beijing 100102 (CN); SHI, Hongshu, Beijing 100102 (CN); LIU, Bo, Beijing 100102 (CN)
(74) Representative: Zimmermann & Partner Patentanwälte mbB
(86) International application number: PCT/CN2023/104068
(87) International publication number: WO 2025/000379

(56) References cited:
- WO-A1-2011/009268
- WO-A1-2011/009268
- WO-A1-2012/119386
- CN-A- 102 970 308
- CN-A- 109 495 362
- US-A1- 2010 115 587
- PAT CALHOUN SUN MICROSYSTEMS ALLAN C RUBENS MERIT NETWORK ET AL: "Extensible Authentication Protocol Support in RADIUS; draft-ietf-radius-eap-05.txt", EXTENSIBLE AUTHENTICATION PROTOCOL SUPPORT IN RADIUS; DRAFT-IETF-RADIUS-EAP-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. radius, no. 5, 8 May 1998 (1998-05-08), XP015026139

## Description

### Technical Field

The present disclosure relates to the technical field of communication, in particular to a terminal authentication method, apparatus, access device, and medium.

### Background

802.1X protocol is a port-based network access control protocol, which authenticates an accessed terminal on an port of access device over a local area network, so as to control the terminal's access to network resources. In 802.1X protocol, Extensible Authentication Protocol (EAP) can be used to realize interaction of authentication information among the terminal, the access device and an authentication server.

When the terminal needs to access network resources, the terminal can send an EAP packet to the access device. The access device can encapsulate user identity information carried by the EAP packet in an access authentication packet and send it to the authentication server. The authentication server can verify the user identity information. If the verification is successful, an authentication success packet is replied to the access device, and the authentication success packet carries permission information of the user. After receiving the authentication success packet, the access device grants corresponding permissions to the user based on the permission information, so that the terminal can access network resources.

However, if the authentication server fails, the access device cannot receive the authentication success packet replied by the authentication server, and thus cannot obtain the permission information of the user, resulting in terminal access authentication failure and inability to access network resources.

CN102970308A discloses a user authentication method and server. The server simultaneously sends authentication requests carrying user name information to multiple authentication sources. If the authentication server receives a successful authentication message from any one of the multiple authentication sources within a predetermined time, the authentication is deemed successful.

Document "PAT CALHOUN SUN MICROSYSTEMS ALLAN C RUBENS MERIT NETWORK ET AL: "Extensible Authentication Protocol Support in RADIUS; draft-ietf-radius-eap-05.txt", EXTENSIBLE AUTHENTICATION PROTOCOL SUPPORT IN RADIUS; DRAFT-IETF-RADIUS-EAP-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. radius, no. 5, 8 May 1998 (1998-05-08)", discloses an overview of the EAP.

WO2011/009268A1 discloses a WAPI (WLAN Authentication and Privacy Infrastructure) - based authentication system and method. When certificate authentication is performed between an access point and a mobile terminal, the access point selects one or more authentication servers to implement the certificate authentication.

### Summary

The examples of the present disclosure aim at providing a terminal authentication method and apparatus, an access device, and medium, which can avoid the problem of terminal online failure caused by server failure.

The invention is set out in the appended set of claims. In accordance with one aspect of the present specification, a terminal authentication method according to claim 1 is provided. In accordance with another aspect of the present specification, an access device according to claim 11 is provided.

The access device can send, to multiple authentication servers, a first packet for requesting access authentication on the terminal. If a second packet sent by any one of the authentication servers is received and the second packet is the second packet firstly received by the access device, a third packet is sent to the terminal, wherein the second packet and the third packet are both used to indicate that the access authentication on the terminal is successful. It can be seen that the access device can send the first packet to the multiple authentication servers. Even if some of the authentication servers failed, the third packet can be relied to the terminal, as long as the second packet replied by any one of the authentication servers is received and the second packet is the firstly received second packet, which will not affect the authentication process on the terminal, and can avoid the problem of terminal online failure caused by server failure.

### Brief Description of the Drawings

The drawings described herein are used to provide further understanding of the present disclosure, and form a part of the present disclosure. The schematic examples and description thereof are used to explain the present disclosure and do not constitute improper limitations to the present disclosure.
FIG. 1 is an exemplary schematic diagram of an EAP relay processing mechanism according to an example of the present disclosure;
FIG. 2 is an exemplary schematic diagram of an EAP termination processing mechanism according to an example of the present disclosure;
FIG. 3 is an exemplary schematic diagram of a networking system according to an example of the present disclosure;
FIG. 4 is a flow diagram of a terminal authentication method according to an example of the present disclosure;
FIG. 5 is an exemplary schematic diagram of a first terminal authentication method according to an example of the present disclosure;
FIG. 6 is an exemplary schematic diagram of a second terminal authentication method according to an example of the present disclosure;
FIG. 7 is an exemplary schematic diagram of a third terminal authentication method according to an example of the present disclosure;
FIG. 8 is an exemplary schematic diagram of a fourth terminal authentication method according to an example of the present disclosure;
FIG. 9 is a schematic structure diagram of a terminal authentication apparatus according to an example of the present disclosure, which is not part of the present invention and is presented only for illustration purposes;
FIG. 10 is a schematic structure diagram of an access device according to an example of the present disclosure.

### Detailed Description

In order to make objectives, technical solutions and advantages of the present disclosure more apparent, the present disclosure now will be described in detail with reference to the accompanying drawings and examples.

For ease of understanding, the relevant terms involved in the examples of the present disclosure are first introduced.

Authentication, Authorization, Accounting (AAA) is a management mechanism for network security, which provides three security functions: authentication, authorization, and accounting.

Authentication: confirming an identity of a user accessing network remotely and determining whether the user is a legitimate network user.

Authorization: granting different permissions to different users and limiting services that the users can use. For example, an administrator can grant office users a permission to access and print files on a server, while other users do not have this permission.

Accounting: recording all operations of users during the use of network services, including the used service type, start time, data traffic, etc., which are used to collect and record the usage of network resources by users. It is possible to account based on the time and traffic, and the accounting function can monitor the network.

The Remote Authentication Dial-In User Service (RADIUS) protocol combines the processes of authentication and authorization. The RADIUS protocol is a distributed information interaction protocol, which can be applied to a networking system including a terminal and an authentication server. The authentication server can protect the network from interference from unauthorized users based on the RADIUS protocol. The RADIUS protocol is applied in network environments that require high security and allow remote access by users. The RADIUS protocol defines a packet format and message transport mechanism of RADIUS, and stipulates that User Datagram Protocol (UDP) is used as a transport layer protocol for encapsulating the RADIUS packet. UDP port 1812 can be used as an authentication/authorization port, and port 1813 can be used as an accounting port.

In a system that uses the 802.1X protocol, the interaction of authentication information among terminal, access device and authentication server can be realized based on EAP. EAP supports multiple authentication methods, for example, Message-Digest algorithm 5-Challenge (MD5-Challenge), Extensible Authentication Protocol-Transport Layer Security (EAP-TLS), Protected Extensible Authentication Protocol (PEAP), etc.

In the process of terminal authentication, the terminal can use the Extensible Authentication Protocol over Local Area Network (EAPOL) encapsulation format to encapsulate the EAP packet in a data frame and send the data frame to the access device.

The access device can interact with the authentication server for the EAP packet through the EAP relay processing mechanism or EAP termination processing mechanism.

The EAP relay processing mechanism refers to the relay processing of received EAP packet by the access device.

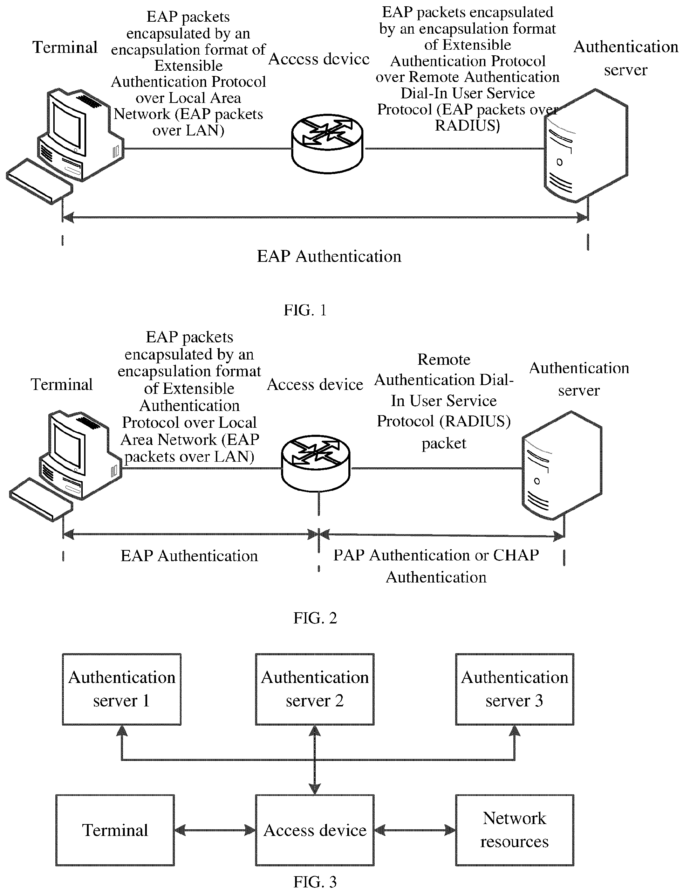

FIG. 1 schematically shows a terminal, an access device, and an authentication server, and the authentication server can specifically be a RADIUS server.

In the EAP relay processing mechanism, EAP authentication is performed between the terminal and the authentication server. In the process of EAP authentication, the terminal sends EAP packets to the access device. The EAP packets are EAP packets encapsulated by using the Extensible Authentication Protocol over Local Area Network encapsulation format. The access device can relay the received EAP packets to obtain the replied EAP packets, which are EAP packets encapsulated by using the Extensible Authentication Protocol encapsulation format over Remote Authentication Dial-In User Service protocol (EAP packets over RADIUS), and the encapsulated EAP packets are sent to the authentication server.

In the above process, the authentication server acts as an EAP server for processing the EAP packets of the terminal, and the access device acts as a relay device for relaying the EAP packets sent by the terminal.

The EAP termination processing mechanism refers to the termination processing of received EAP packets by the access device.

FIG. 2 schematically shows a terminal, an access device, and an authentication server.

In the EAP termination processing mechanism, EAP authentication is used between the terminal and the access device for authentication, and Password Authentication Protocol (PAP) Authentication or Challenge Handshake Authentication Protocol (CHAP) Authentication is used between the access device and the authentication server for authentication. The terminal sends EAP packets to the access device. The EAP packets are EAP packets encapsulated by using the Extensible Authentication Protocol over Local Area Network encapsulation format. The access device encapsulates user identity information carried by the EAP packets in a standard Remote Authentication Dial-In User Service Protocol (RADIUS) packet, and sends the RADIUS packet to the authentication server.

In order to avoid terminal access authentication failure caused by authentication server failure, an example of the present disclosure provides a terminal authentication method, which can be applied to the networking system shown in FIG. 3.

In the example of the present disclosure, the access device can be connected to multiple authentication servers. FIG. 3 schematically shows an authentication server 1, authentication server 2, authentication server 3, access device, and terminal.

The terminal accesses the network through an access device, which is respectively connected to authentication server 1, authentication server 2, and authentication server 3.

The terminal needs to access network resources through the access device. The terminal can send EAP packets to the access device for requesting access authentication, the access device can send authentication request packets to the authentication server through the EAP relay processing mechanism or EAP termination mechanism. The authentication request packets can be the EAP packets over LAN or RADIUS packets mentioned above.

The authentication server can perform access authentication on the terminal based on the user identity information carried by the authentication request packets. If the access authentication is successful, the authentication server sends an authentication success packet carrying user permission information to the access device. Then the access device can grant corresponding permissions to the user based on the user permission information. In this way, the access device can release traffic within the user's permission, so that the terminal can access network resources.

It should be noted that in the examples of the present disclosure, the terminal can be a network device such as a mobile phone, computer, switch that requests access to network resources, etc., and other electronic devices that can request access to network resources; the terminal can also be a phone or printer that uses Internet Protocol (IP) or Media Access Control (MAC) addresses as identity credentials, or an electronic device used to manage the access device. This terminal generally refers to an electronic device that needs to access network resources and an electronic device used to manage the access device.

The access device generally refer to various network devices that support user access authentication, such as switch, router, wireless access point (AP), access controller (AC), and firewall, etc.

The terminal authentication method provided by the example of the present disclosure is described in detail below.

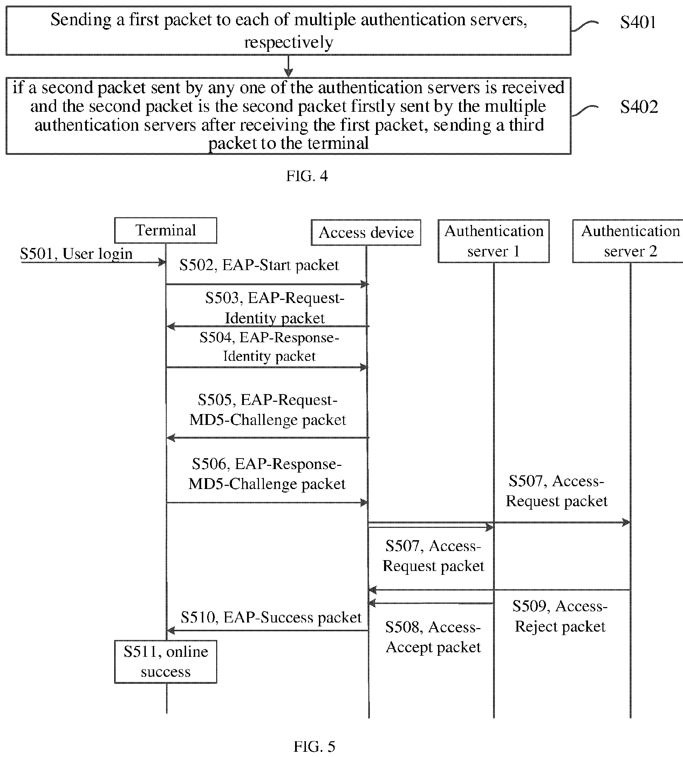

As shown in FIG. 4, the present disclosure provides a terminal authentication method, which is applied to an access device, including:
S401, sending a first packet to each of multiple authentication servers respectively.

Wherein the first packet is used to request an authentication server to perform access authentication on a terminal. As an example, the first packet can be an access-request packet.

The first packet carries user identity information of the user. The authentication server can parse the first packet to obtain the user identity information, and authenticate the terminal based on the parsed user identity information.

S402, if a second packet sent by any one of the authentication servers after receiving the first packet is received and the second packet is a second packet firstly received by the access device, sending a third packet to the terminal.

Wherein the second packet and the third packet are both used to indicate that the access authentication on the terminal is successful. As an example, the second packet can be an Access-Accept packet, and the third packet can be an EAP-Success packet.

The access device can simultaneously send the first packet to each of the multiple authentication servers. After receiving the first packet, each of the authentication servers may perform terminal authentication based on the first packet. If the authentication is successful, a second packet is replied to the access device. Correspondingly, the access device may receive multiple second packets, and can send, when firstly receiving a second packet, a third packet to the terminal. When receiving the second one and subsequent ones of the multiple second packets, there is no need to repeatedly send the third packet to the terminal.

Using the above technical solution, the access device can send the first packet to multiple authentication servers for requesting access authentication on the terminal. If the second packet sent by any one of the authentication servers is received and the second packet is a second packet firstly received by the access device, a third packet is sent to the terminal, wherein the second packet and the third packet are both used to indicate access authentication success. It can be seen that the access device can send the first packet to multiple authentication servers. Even if a portion of the authentication servers is fail, the third packet can be relied to the terminal as long as the second packet replied by any one of the authentication servers is received and the second packet is the firstly received second packet, which will not affect the authentication process of the terminal, and can avoid the problem of terminal online failure caused by server failure.

In the present disclosure, in a scenario in which the EAP relay processing mechanism is used, after S401 of sending a first packet to each of multiple authentication servers respectively, the method further includes:
Block 1, if a fourth packet sent by any one of the authentication servers after receiving the first packet is received and the fourth packet is a fourth packet firstly received by the access device, sending a fifth packet to the terminal.

Wherein the fifth packet includes an authentication parameter, and the authentication parameter is carried by an EAP packet included in the fourth packet.

The authentication parameter can be information such as algorithm suite for Transport Layer Security (TLS) tunnel, Random in the Server Hello packet, or the Challenge parameter for Microsoft Challenge-Handshake Authentication Protocol version 2 (MSCHAPv2), etc.

As an example, the fourth packet can be an Access-Challenge packet, and the fifth packet can be an EAP-request packet. In the case where the fourth packet is Access-Challenge, the authentication parameter can be the Challenge parameter, and correspondingly, the fifth packet also carries the Challenge parameter.

It should be noted that the fourth packet is the packet encapsulated in EAPOR format, and the access device can obtain the EAP packet encapsulated in the first one of fourth packets and record the EAP packet.

The EAP packet is specifically encapsulated in an EAP-Message attribute of the fourth packet. The access device can extract the EAP-Message attribute, record the EAP-Message attribute as a server-EAP-Message attribute, and store it locally. This is equivalent to storing the EAP packet in the fourth packet.

Block 2, receiving a sixth packet sent by the terminal.

Wherein the sixth packet includes user identity information, and the user identity information is encrypted by the authentication parameter. As an example, the user identity information can specifically be a password entered by the user. When the authentication parameter is the Challenge parameter, the terminal can obtain the Challenge parameter from the fifth packet and encrypt the password entered by the user based on the Challenge parameter to obtain the encrypted password. Then the encrypted password is encapsulated in the sixth packet.

As an example, the sixth packet can be an EAP-Response packet.

Block 3, sending a seventh packet to each of the authentication servers respectively, wherein the seventh packet includes the sixth packet and the EAP packet, to enable the authentication server to verify the user identity information based on the authentication parameter.

As an example, the seventh packet can be an Access-Request packet.

The seventh packet includes an EAP-Message attribute, which is used to carry the EAP packet. The EAP-Message attribute has a preset length. If the length of the EAP packet is greater than the preset length, then the seventh packet includes multiple EAP-Message attributes, and the EAP packet is carried in the multiple EAP-Message attributes in a form of fragments.

As an example, the preset length can be 253 bytes, meaning that the EAP packet will be fragmented when the length of the EAP packet exceeds 253 bytes. The access device will encapsulate the fragmented EAP packet in multiple EAP-Message attributes. The attribute number of the EAP-Message attribute can be assigned according to the actual situation, such as assigning the attribute number value that is not currently used, such as 239. The example of the present disclosure does not specifically limit the attribute number value, and the carried data type is Octets.

In the example of the present disclosure, the above EAP-Message attribute is added in the seventh packet, and the EAP-Message attribute can be specifically the Server-EAP-Message attribute. The Server-EAP-Message attribute is used to carry the EAP packet in the Server-EAP-Message attribute recorded after the access device firstly receives a fourth packet in block 1.

According to the protocol provisions, the seventh packet further includes a Client-EAP-Message attribute, which is used to carry the sixth packet.

After receiving the seventh packet, each authentication server obtains the EAP packet from the Server-EAP-Message attribute and the authentication parameter carried by the EAP packet, and obtains the sixth packet from the Client-EAP-Message attribute, and obtain the user identity information carried by the sixth packet.

It should be noted that both the Server-EAP-Message attribute and the Client-EAP-Message attribute are both EAP-Message attributes. In the example of the present disclosure, in order to distinguish between the two EAP-Message attributes carried in the seventh packet, the two EAP-Message attributes are referred to as the Server-EAP-Message attribute and Client-EAP-Message attribute respectively. The example of the present disclosure does not limit the name of the EAP-Message attribute.

It can be understood that the authentication parameters generated by individual authentication servers are different from each other, and each authentication server locally stores the authentication parameter generated by itself. The authentication parameter obtained by the authentication server from the seventh packet may be different from the locally stored authentication parameter.

Due to the fact that the user identity information carried in the seventh packet is encrypted by using the authentication parameter carried in the seventh packet, in order to correctly verify the user identity information, the authentication server needs to update the locally stored authentication parameter to the authentication parameter carried in the seventh packet, and then use the updated authentication parameter to encrypt the locally stored user identity information. If the encrypted user identity information is the same as the user identity information obtained from the seventh packet, the terminal access authentication on terminal is passed.

For example, multiple authentication servers include authentication server 1, authentication server 2, and authentication server 3. Authentication server 1 locally stores authentication parameter 1, authentication server 2 locally stores authentication parameter 2, and authentication server 3 locally stores authentication parameter 3.

If the fourth packet firstly received by the access device is sent by authentication server 1, the EAP packet encapsulated in the Server-EAP-Message attribute of the seventh packet is the same as the EAP packet in the fourth packet. That is, the authentication parameter carried in the seventh packet is authentication parameter 1, and the user identity information carried in the seventh packet is encrypted by authentication parameter 1.

If authentication server 1 fails or the network between authentication server 1 and the access device is unreachable in the future, authentication server 1 cannot receive the seventh packet, while authentication server 2 and authentication server 3 can receive the seventh packet.

Due to the fact that the user identity information carried in the seventh packet is encrypted by authentication parameter 1, if authentication server 2 verifies the user identity information by using the locally stored authentication parameter 2 after receiving the seventh packet, it will result in authentication failure. Therefore, in the example of the present disclosure, the Server-EAP-Message attribute newly added in the seventh packet carries the EAP packet. Authentication server 1 can obtain authentication parameter 1 from the EAP packet and use authentication parameter 1 to overwrite the locally stored authentication parameter 2, and then use authentication parameter 1 to authenticate the user identity information carried in the seventh packet.

Similarly, after receiving the seventh packet, authentication server 3 can obtain authentication parameter 1 from the seventh packet and use authentication parameter 1 to overwrite the locally stored authentication parameter 3, and then use authentication parameter 3 to authenticate the user identity information carried in the seventh packet.

It can be seen that, by adding the Server-EAP-Message attribute in the seventh packet, the synchronization of authentication parameter between different authentication servers is achieved, such that the authentication server can use the correct authentication parameter to authenticate the user identity information, avoiding the problem of access authentication failure caused by incorrect authentication parameters used by the authentication server, thereby avoiding the problem of users being unable to access the network for a long time and improving the user experience. Moreover, although a data synchronization channel can be established between authentication servers, real-time synchronization cannot be achieved by using the data synchronization channel between authentication servers to synchronize the authentication parameter. The example of the present disclosure carries the authentication parameter in the seventh packet sent by the access device, ensuring that the authentication server can obtain the correct authentication parameter when authenticating the user identity, which can avoid the problem of authentication failure due to the fact that the authentication parameter is not synchronized in time.

It should be noted that in the scenario in which the EAP relay processing mechanism is used, there may be multiple interaction processes of user information authentication between the terminal and the authentication server. Each interaction process is used to authenticate different user identity information, the number of interactions and the user identity information that needs to be authenticated for each interaction can refer to relevant protocol provisions, which is not limited by the example of the present disclosure.

Continuing with the above example, if the authentication of both authentication server 2 and authentication server 3 are passed, a continuing authentication packet can be sent to the access device. The EAP packet encapsulated in the continuing authentication packet also carries the authentication parameter. The access device still records the EAP packet in the firstly received continuing authentication packet, and the subsequent processes are similar to blocks 1 to 3 above, and the third packet is sent to the terminal after the access device firstly receives a second packet.

As an optional implementation, after the authentication server generates the authentication parameter, a newly added Radius attribute can be used to carry the authentication parameter. When sending the seventh packet to multiple authentication servers in the future, the newly added Radius attribute can also be used to carry the authentication parameter. In this way, the problem of authentication failure due to the fact that the authentication parameter is not synchronized in time. However, the method of using the Server-EAP-Message attribute to synchronize the authentication parameter introduced in the above examples is more secure and simpler to implement.

In the scenario in which the EAP relay processing mechanism is used, after sending the first packet to multiple authentication servers, it can be determined that the access authentication on the terminal is failed in the following three situations, as explained below.

Situation 1, if the same number of eighth packets as that of the multiple authentication servers are received within a first preset duration, the authentication result of each of the servers for the terminal is respectively recorded as access authentication failure, and a ninth packet is sent to the terminal.

The first preset duration can be set according to experience. The authentication result carried by each of the eighth packets indicates that the access authentication on the terminal is failed, and the ninth packet is used to indicate that the access authentication on the terminal is failed. As an example, the eighth packet is an Access-Reject packet, and the ninth packet is an EAP-Failure packet.

The access device locally stores a user table for each user. In the example of the present disclosure, the access device can set a server table in the user table of a user currently being authenticated. The server table includes basic information of each of the multiple authentication servers mentioned above, as well as the authentication result replied by each of the multiple authentication servers, wherein the basic information can include the IP address, port number and Shared secret of the authentication server. The authentication result can be authentication success, authentication failure, or continuing authentication.

It can be understood that each time the access device receives the eighth packet within the first preset duration, the authentication result corresponding to the authentication server that sent this eighth packet can be recorded as authentication failure. If authentication results of multiple authentication servers are all recorded as authentication failure, the ninth packet can be sent to the terminal.

Situation 2, if no packet sent by any one of the authentication servers is received after expiration of the first preset duration, the authentication result of each server for the terminal is respectively recorded as the authentication server being unreachable, and the ninth packet is sent to the terminal.

If no packet sent by any one of the authentication servers is received after expiration of the first preset duration, it indicates that each of the multiple authentication servers does not respond to the first packet, which may be due to all of the multiple authentication servers failing or the network between the multiple authentication servers and the access device being unreachable. Combining with the server table introduced in situation 1, for each authentication server, if no packet replied by the authentication server is received after expiration of the first preset duration, the authentication result corresponding to the authentication server can be recorded as the authentication server being unreachable in the server table.

If the authentication results of the multiple authentication servers are all recorded as the authentication server being unreachable, the ninth packet can be sent to the terminal.

Situation 3, if eighth packets sent by a first number of authentication servers are received within the first preset duration, and the authentication result carried by each of the eighth packets indicates that the access authentication on the terminal is failed, authentication results of the first number of authentication servers for the terminal are recorded as access authentication failure respectively;
If packets sent by a second number of authentication servers in the multiple authentication servers have not been received after expiration of a first preset duration, the authentication results of the second number of authentication servers for the terminal are recorded as the authentication server being unreachable respectively.

The ninth packet or a tenth packet is sent to the terminal. The ninth packet is used to indicate that the access authentication on the terminal is failed, and the tenth packet is used to indicate that the access authentication on the terminal is successful. The sum of the first number and the second number is the same as the number of the multiple authentication servers.

Combining with the introduction in situation 1 and situation 2, for each of the multiple authentication servers, if the eighth packet sent by the authentication server is received within the first preset duration, the authentication result corresponding to the authentication server is recorded as authentication failure; if no packet sent by the authentication server is received after expiration of the first preset duration, the authentication result corresponding to the authentication server is recorded as the authentication server being unreachable.

In addition, if the second packet sent by the authentication server is received within the first preset duration, the authentication result corresponding to the authentication server is recorded as authentication success; if a packet indicating continuing authentication sent by the authentication server is received within the first preset duration, the authentication result corresponding to the authentication server is recorded as continuing authentication. It can be understood that in the case of multiple interaction processes, if there is the continuing authentication in the authentication results corresponding to the multiple authentication servers, the access device needs to update the authentication result of each authentication server according to the above method in each of subsequent interaction processes.

If some of the authentication results of the multiple authentication servers are recorded as access authentication failure and the authentication results of other authentication servers are all recorded as the authentication server being unreachable, the ninth packet or the tenth packet can be sent to the terminal.

If the access device is equipped with an escape strategy, the tenth packet can be sent to the terminal, and the terminal is allowed to access network resources; if the escape strategy is not configured, the ninth packet can be sent to the terminal, the terminal is rejected to access network resources. The example of the present disclosure does not limit the configuration method and strategy content of the escape strategy, which can refer to the protocol provisions relating to EAP authentication for details.

As an example, if the access device is connected to 5 authentication servers, and after sending the first packet to the 5 authentication servers, the access device receives the eighth packets sent by 3 authentication servers but does not receive the packets sent by the other 2 authentication servers within the first preset duration, the authentication results corresponding to the 3 authentication servers are recorded as authentication failure, and the authentication results of the 2 authentication servers are recorded as the authentication server unreachable, and then the access device sends the ninth or tenth packet to the terminal.

With this method, the access device can simultaneously send the first packet to each of the multiple authentication servers respectively, and the access authentication result of each authentication server for the terminal is recorded. After receiving the second packet replied by any one of the authentication servers, the access device can reply the third packet to the terminal, thereby reducing the waiting time of the terminal. Furthermore, only when the authentication results of the multiple authentication servers are all failure, access authentication failure will be notified to the terminal, which can avoid problems of failure of access authentication on terminal or long waiting time caused by failure of some of the authentication servers or network unreachability.

In the scenario where the EAP termination processing mechanism is used, after sending the first packet to multiple authentication servers, it can be determined that the access authentication on the terminal is failed in the following three situations, as explained below.

Situation 1, if the same number of eighth packets as the that of the multiple authentication servers are received within a second preset duration, and an authentication result carried by each of the eighth packets indicates the access authentication on the terminal is failed, the authentication result of each of the servers for the terminal is respectively recorded as access authentication failure, and the ninth packet is sent to the terminal.

The second preset duration can be set according to experience. The authentication result carried by each of the eighth packets is used to indicate that the access authentication on the terminal is failed, and the ninth packet is used to indicate that the access authentication on the terminal is failed. As an example, the eighth packet is an Access-Reject packet, and the ninth packet is an EAP-Failure packet.

The access device locally stores a user table for each user. In the example of the present disclosure, the access device can set a server table in the user table of a user currently being authenticated. The server table includes basic information of each of the multiple authentication servers mentioned above, as well as the authentication result replied by each of the multiple authentication servers, wherein the basic information can include the IP address, port number and Shared secret of the authentication server. The authentication result can be authentication success, authentication failure, or continuing authentication.

It can be understood that each time the access device receives the eighth packet within the first preset duration, the authentication result corresponding to the authentication server that sent this eighth packet can be recorded as authentication failure. If authentication results of the multiple authentication servers are all recorded as authentication failure, the ninth packet can be sent to the terminal.

Situation 2, if no packet sent by any one of the authentication servers is received after expiration of the second preset duration, the authentication result of each of the servers for the terminal is respectively recorded as the authentication server being unreachable, and the ninth packet is sent to the terminal.
if no packet sent by any one of the authentication servers is received after expiration of the first preset duration, it indicates that each of the multiple authentication servers does not respond to the first packet, which may be due to all of the multiple authentication servers failing or the network between the multiple authentication servers and the access device being unreachable. Combining with the server table introduced in situation 1, for each authentication server, if no packet replied by the authentication server is received after expiration of the first preset duration, the authentication result corresponding to the authentication server can be recorded as the authentication server being unreachable in the server table.

If the authentication results of the multiple authentication servers are all recorded as the authentication server being unreachable, the ninth packet can be sent to the terminal.

Situation 3, if eighth packets sent by a third number of authentication servers are received within the second preset duration, and the authentication result carried by each of the eighth packets indicates that the access authentication on the terminal is failed, the authentication results of the third number of authentication servers for the terminal are recorded as access authentication failure respectively.

If packets sent by a fourth number of authentication servers in the multiple authentication servers have not been received after expiration of the second preset duration, the authentication results of the fourth number of authentication servers for the terminal are recorded as the authentication server being unreachable respectively.

The ninth packet or a tenth packet is sent to the terminal. The ninth packet is used to indicate that the access authentication on the terminal is failed, and the tenth packet is used to indicate that the access authentication on the terminal is successful. The sum of the third number and the fourth number is the same as the number of the multiple authentication servers.

Combining with the introduction in situation 1 and situation 2, for each of the multiple authentication servers, if the eighth packet sent by the authentication server is received within the first preset duration, the authentication result corresponding to the authentication server is recorded as authentication failure; if no packet sent by the authentication server is received after expiration of the first preset duration, the authentication result corresponding to the authentication server is recorded as the authentication server being unreachable.

In addition, if the second packet sent by the authentication server is received within the first preset duration, the authentication result corresponding to the authentication server is recorded as authentication success; if a packet indicating continuing authentication sent by the authentication server is received within the first preset duration, the authentication result corresponding to the authentication server is recorded as continuing authentication. If the authentication results of multiple authentication servers are all recorded as authentication failure, the ninth packet can be sent to the terminal.

With this method, the access device can simultaneously send the first packet to each of the multiple authentication servers respectively, and the access authentication result of each authentication server for the terminal is recorded. After receiving the second packet replied by any one of the authentication servers, the access device can reply the third packet to the terminal, thereby reducing the waiting time of the terminal. Furthermore, only when the authentication results of the multiple authentication servers are all failure, access authentication failure will be notified to the terminal, which can avoid problems of failure of access authentication on the terminal or long waiting time caused by failure of some of the authentication servers or network unreachability.

**In** another example of the present disclosure, the access device is connected to multiple sets of authentication servers, wherein each set of authentication servers includes at least one authentication server. S401 of sending a first packet to each of multiple authentication servers respectively can be implemented by:
selecting a set of authentication servers from the multiple sets of authentication servers in a load-sharing manner, and sending the first packet to the selected set of authentication servers; or selecting a preset number of authentication servers from each set of authentication servers included in the multiple sets of authentication servers respectively in a load-sharing manner, and sending the first packet to the selected authentication servers.

**In** the example of the present disclosure, for scenarios with a high concurrency of users online, the authentication servers connected to the access device can be grouped in advance, and the IP addresses of each set of authentication servers are stored in the access device.

In this way, after the terminal initiates access authentication to the access device, the terminal can select the authentication server in a load-sharing manner.

For example, the access device is connected to 3 sets of authentication servers, and each set of authentication servers includes 3 authentication servers.

In one implementation, if the load pressure of the first set of authentication servers is small, the 3 authentication servers included in the first set of authentication servers are used as the multiple authentication servers in the above example, and the first packet is sent to the 3 authentication servers.

In another implementation, if the load pressure of authentication server A in the first set of authentication servers, authentication server B in the second set of authentication servers, and authentication server C in the third set of authentication servers is small, authentication server A, authentication server B, and authentication server C can be used as the multiple authentication servers in the above example, and the first packet is sent to authentication server A, authentication server B, and authentication server C respectively.

The examples of the present disclosure can use any load-sharing algorithm to select the authentication server, which is not limited by the examples of the present disclosure.

With this method, the problem of multiple terminals initiating access authentication at the same time and the access device sending authentication request packets for the multiple terminals to all authentication servers can be avoided. This can enable access authentication requests from different terminals to be shared to different servers, reducing the processing pressure of a single authentication server.

Combined with specific examples, the EAP termination processing mechanism and EAP relay processing mechanism in the example of the present disclosure will be described in the following.

A terminal authentication method provided in an example of the present disclosure is introduced using the EAP termination processing mechanism as an example. As an example, the access device is connected with authentication server 1 and authentication server 2 as shown in FIG. 5, and the method includes the following blocks.

S501, user login.

S502, a terminal sends an EAP-Start packet to the access device, and correspondingly, the access device receives the EAP-Start packet.

After the user logs in to the terminal, the terminal is triggered to start the access authentication process, and then the terminal sends the EAP-Start packet to the access device. The EAP-Start packet can be a protocol packet such as 802.1x protocol, Point to Point Protocol (PPP) or Dynamic Host Configuration Protocol (DHCP), or can be various service packets such as MAC address authentication packets. That is, the EAP-Start packet generally refers to a packet that can trigger the access device for access authentication.

After receiving the EAP-Start packet, the access device creates a user table entry for the user in a local user table, wherein the user table entry is used to store user information. Specifically, the user table entry use the MAC address of the terminal as key to store information such as an interface of the terminal and VLAN.

S503, the access device sends an EAP-Request-Identity packet to the terminal, and correspondingly, the terminal receives the EAP-Request-Identity packet.

The EAP-Request-Identity packet is used to request to obtain a username of the terminal.

S504, the terminal sends an EAP-Response-Identity packet to the access device, and correspondingly, the access device receives the EAP-Response-Identity packet.

The EAP-Response-Identity packet includes the username entered by the user on the terminal. The access device can obtain the username from the EAP-Response-Identity packet and search for it in a pre-stored username list. If the username is found, a MD5 Challenge is randomly generated.

S505, the access device sends an EAP-Request-MD5-Challenge packet to the terminal, and correspondingly, the terminal receives the EAP-Request-MD5-Challenge packet.

The EAP-Request-MD5-Challenge packet includes the MD5-Challenge generated by the access device.

S506, the terminal sends an EAP-Response-MD5-Challenge packet to the access device, and correspondingly, the access device receives the EAP-Response-MD5-Challenge packet.

After receiving the EAP-Request-MD5-Challenge packet, the terminal obtains the MD5 Challenge from the EAP-Request-MD5-Challenge packet, and uses the MD5 Challenge to encrypt the password entered by the user, so as to obtain the encrypted password.

The EAP-Response-MD5-Challenge packet carries the encrypted password.

S507, the access device sends an Access-Request packet to authentication server 1 and authentication server 2, and correspondingly, authentication server 1 and authentication server 2 receive the Access-Request packet.

The Access-Request packet includes the username, the encrypted password, and the MD5 Challenge.

Both authentication server 1 and authentication server 2 can obtain the username, the encrypted password, and the MD5 Challenge from the Access-Request packet, and locally obtain the password corresponding to the username, then use the MD5 Challenge to encrypt the password obtained locally, and then compare the encryption result with the encrypted password obtained from the Access-Request packet. If the encryption result and the encrypted password obtained from the Access-Request packet are consistent, access authentication on the terminal is successful; and if the encryption result and the encrypted password obtained from the Access-Request packet are inconsistent, access authentication on the terminal is failed.

In the example of the present disclosure, it is assumed that authentication server 1 successfully performs access authentication on the terminal, while authentication server 2 fails to perform access authentication on the terminal. After authentication server 1 completes the authentication, S508 is executed, and after authentication server 2 completes the authentication, S509 is executed.

In addition, the access device can determine the user table entry corresponding to the terminal based on the MAC address of the terminal, and create a server table in the corresponding user table entry. The server table is used to store the authentication result fed back by each authentication server.

S508, authentication server 1 sends an Access-Accept packet to the access device, and correspondingly, the access device receives the Access-Accept packet.

After receiving the Access-Accept packet, the access device can record the authentication result corresponding to authentication server 1 in the server table as access authentication success. After S508, S510 is executed.

S509, authentication server 2 sends an Access-Reject packet to the access device, and correspondingly, the access device receives the Access-Reject packet.

The Access-Reject packet is used to indicate that the access authentication of authentication server 2 on the terminal failed. After receiving the Access-Reject packet, the access device can record the authentication result corresponding to authentication server 2 in the server table as access authentication failure.

S510, the access device sends an EAP-Success packet to the terminal, and correspondingly, the terminal receives the EAP-Success packet.

The EAP-Success packet is used to indicate that the authentication server has successfully authenticated the terminal.

S511, the terminal is online successfully.

At this point, the terminal is online successfully, and the network resources can be accessed through the access device in the future.

With the above method, the access device can simultaneously send the Access-Request packet to multiple authentication servers. Upon receiving the Access-Accept packet replied by any one of the authentication servers, the access device can reply the EAP-Success packet to the terminal. If some of the authentication servers are malfunctioning or busy, the access device does not need to wait for these malfunctioning or busy authentication servers to reply with the Access-Accept packet, and after the access device firstly receives the Access-Accept packet, access authentication success can be notified to the terminal. In this way, it can avoid affecting the speed of the terminal access to the network due to authentication server failure or busyness, which can improve the user's network access experience.

Moreover, since it can be determined that access authentication on the terminal is successful when the access device receives the Access-Accept packet replied by any one of the authentication servers, and it can be determined that access authentication on the terminal is failed only when the access authentication result of each of the authentication servers for the terminal is access authentication failure, access authentication failure on the terminal due to the fact that some of the authentication servers failed or are busyness can be avoided.

It should be noted that in FIG. 5, the EAP protocol packet is used as an example for illustration. However, in the scenario where the authentication on the terminal can be completed with only one interaction between the access device and the authentication server, if the access authentication between the terminal and the access device is performed using other non-EAP protocols such as PPP, Http/Https packets, etc., the method introduced in FIG. 5 can also be used to achieve fast access authentication.

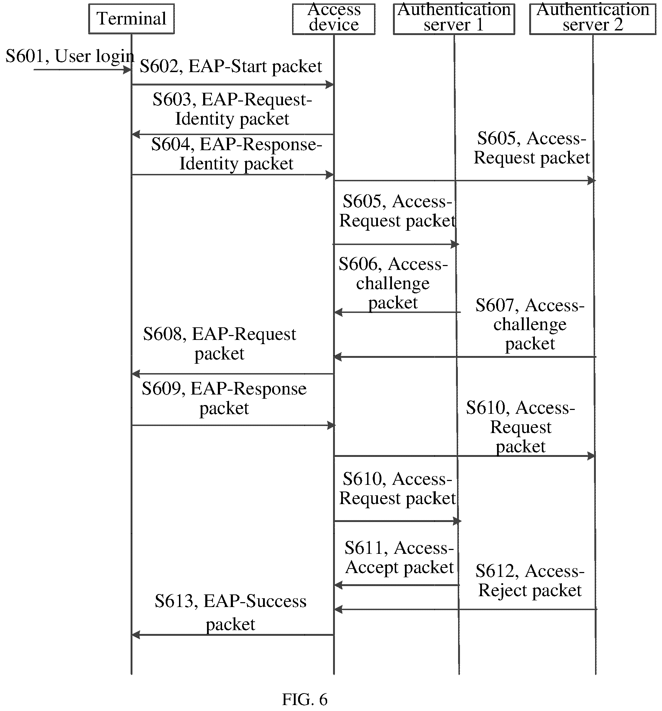

Taking the EAP relay processing mechanism as an example, a terminal authentication method provided by an example of the present disclosure is introduced. As an example, the access device is connected with authentication server 1 and authentication server 2 as shown in FIG. 6, and the method includes the following blocks.

S601, user login.

S602, the terminal sends an EAP-Start packet to the access device, and correspondingly, the access device receives the EAP-Start packet.

The introduction of the EAP-Start packet can refer to the relevant description in S502 above, and will not be repeated here.

S603, the access device sends an EAP-Request-Identity packet to the terminal, and correspondingly, the terminal receives the EAP-Request-Identity packet.

The EAP-Request-Identity packet is used to request to obtain an username of the terminal.

S604, the terminal sends an EAP-Response-Identity packet to the access device, and correspondingly, the access device receives the EAP-Response-Identity packet.

The EAP-Response-Identity packet includes the username.

S605, the access device sends an Access-Request packet to authentication server 1 and authentication server 2, and correspondingly, authentication server 1 and authentication server 2 receive the Access-Request packet.

The Access-Request packet is a packet encapsulated using the RADIUS protocol. The Access-Request packet includes a Client-EAP-Message attribute, and the EAP-Response-Identity packet is encapsulated in the Client-EAP-Message attribute.

In addition, the access device can determine a user table entries corresponding to the terminal based on the MAC address of the terminal, and create a server table in the corresponding user table entry, and the server table is used to store the authentication result fed back by each authentication server.

After receiving the Access-Request packet, authentication server 1 and authentication server 2 can negotiate the authentication mode with the terminal. The specific negotiation mode can refer to the relevant protocol provisions, which is not limited by the example of the present disclosure. If both authentication server 1 and authentication server 2 need to continue perform authentication on the terminal, authentication server 1 executes S606 and authentication server 2 executes S607.

S606, authentication server 1 sends an Access-challenge packet to the access device, and correspondingly, the access device receives the Access-challenge packet.

After receiving the Access-Request packet, authentication server 1 can obtain the username from the Access-Request packet, and search for the username in the pre-stored username list; if the username is found, a Challenge, for example, Challenge1, is randomly generated.

The Access-challenge packet is a packet of the RADIUS protocol. The Access-challenge packet includes a Client-EAP-Message attribute, and an EAP packet, which carries Challenge1, is encapsulated in the Client-EAP-Message attribute.

S607, authentication server 2 sends an Access-challenge packet to the access device, and correspondingly, the access device receives the Access-challenge packet.

After receiving the Access-Request packet, authentication server 2 can obtain the username from the Access-Request packet, and search for the username in the pre-stored username list; if the username is found, a Challenge, for example, Challenge2, is randomly generated.

The Access-challenge packet is a packet of the RADIUS protocol. The Access-challenge packet includes a Client-EAP-Message attribute, an EAP packet which carries Challenge2, is encapsulated in the Client-EAP-Message attribute.

It can be understood that the access device receives the Access-challenge packets replied by authentication server 1 and authentication server 2 at different times. After firstly receiving the Access-challenge packet, the access device can execute S608.

It should be noted that after the access device firstly receives the Access-challenge packet, the access device extracts the Client-EAP-Message attribute of the Access-challenge packet and records the Client-EAP-Message as the Server-EAP-Message attribute.

In this round of interaction, if the access device receives other Access-challenge packets subsequently, it can be checked whether the Server-EAP-Message attribute has been recorded locally. If the Server-EAP-Message attribute has been recorded locally, there is no need to repeat the recording.

Since both authentication server 1 and authentication server 2 reply with Access-challenge packets, the access device can record the access authentication results corresponding to authentication server 1 and authentication server 2 in the server table as continuing authentication respectively.

S608, the access device sends an EAP-Request packet to the terminal, and correspondingly, the terminal receives the EAP-Request packet.

As an example, if the Access-challenge packet firstly received by the access device is from authentication server 1, the EAP-Request packet carries Challenge1.

S609, the terminal sends an EAP-Response packet to the access device, and correspondingly, the access device receives the EAP-Response packet.

The terminal can obtain challenge1 from the EAP-Request packet, calculate an MD5 value using challenge1, username, and the password entered by the user, and then encapsulate the MD5 value in the EAP-Response packet.

S610, the access device sends an Access-Request packet to authentication server 1 and authentication server 2, and correspondingly, authentication server 2 receives the Access-Request packet.

The Access-challenge packet is a packet of the RADIUS protocol, and the Access-challenge packet includes a Client-EAP-Message attribute and a Server-EAP-Message attribute.

The EAP-Response packet in S610 is encapsulated in the Client-EAP-Message attribute, while the EAP packet, which is the EAP packet in the Server-EAP-Message attribute recorded by the access device in S606 and carrying Challenge1, is encapsulated in the Server-EAP-Message attribute.

After receiving the Access-Request packet, both authentication server 1 and authentication server 2 firstly parse the Server-EAP-Message attribute to obtain Challenge1, and use Challenge1 to overwrite the locally stored Challenge.

It can be understood that the Challenge updated by authentication server 1 is still Challenge1, and authentication server 2 updates the locally stored Challenge from Challenge2 to Challenge1.

Both authentication server 1 and authentication server 2 can parse the MD5 value from the Client-EAP-Message attribute and obtain the locally stored password corresponding to the user, and then use the Challenge1, username, and locally stored password to calculate an MD5 value, and compare the calculated MD5 value with the MD5 value parsed from the Client-EAP-Message attribute. If the calculated MD5 value with the MD5 value parsed from the Client-EAP-Message attribute are consistent, it indicates that the authentication is passed; and the calculated MD5 value with the MD5 value parsed from the Client-EAP-Message attribute are inconsistent, it indicates that the authentication is failed.

After authentication server 1 and authentication server 2 receive the Access-Request packet, assuming that authentication server 1 successfully authenticates the user identity information and authentication server 2 fails to authenticate the user identity information, then authentication server 1 executes S611 and authentication server 2 executes S612.

S611, authentication server 1 sends an Access-Accept packet to the access device, and correspondingly, the access device receives the Access-Accept packet.

The Access-Accept packet is used to indicate access authentication success, and the Access-Accept packet does not carry the EAP-Message attribute.

After receiving the Access-Accept packet, the access device can record the authentication result of authentication server 1 as access authentication success in the server table.

After S611, S613 is executed.

S612, authentication server 2 sends an Access-Reject packet to the access device, and correspondingly, the access device receives the Access-Reject packet.

The Access-reject packet is used to indicate authentication failure.

After receiving the Access-reject packet, the access device can record the authentication result corresponding to authentication server 2 as access authentication failure in the server table.

S613, the access device sends an EAP-Success packet to the terminal, and correspondingly, the terminal receives the EAP-Success packet.

At this point, the user is online successfully, and can access the network resources.

It should be noted that after S610, if authentication server 1 times out without replying, the authentication result corresponding to authentication server 1 can be recorded as the authentication serve being unreachable in the server table. After receiving the Access-reject packet replied by authentication server 2, the authentication result corresponding to authentication server 2 can be recorded as access authentication failure in the server table.

In this case, if some of the authentication servers are unreachable, authentication of some of the authentication servers failed, and the access device does not receive any Access-Accept packet replied by any of the authentication servers, then it can be determined whether to allow users to access network resources based on a pre-configured policy. For example, if the access device is configured with an escape strategy, the escape process can be triggered, and an EAP-Success packet is sent to the terminal, allowing the terminal to access network resources. If the access device is not configured with an escape strategy, an EAP authentication failure packet can be replied to the terminal, rejecting the user access to network resources.

FIG. 6 takes a MD5-based EAP relay processing mechanism as an example to illustrate the role of the newly added Server-EAP-Message attribute in the example of the present disclosure, and the detailed process of the EAP relay processing mechanism can refer to a standard EAP relay authentication process.

With the above method, the access device can use the Server-EAP-Message attribute to carry a challenge parameter generated by an authentication server, such that other authentication servers can also use the challenge parameter carried by the Server-EAP-Message attribute to authenticate the user identity information. Even if the authentication server that generates the challenge parameter fails, the access authentication process of the terminal will not be affected, which can avoid the problem of terminal online failure caused by server failure, and will not affect the access authentication speed of the terminal, thereby avoiding the impact on online speed and online result of the user, and improving the network access experience of the user.

As an example, the method provided by the example of the present disclosure is also applicable to a PEAP-MSCHAPv2 authentication mode. In the PEAP-MSCHAPv2 authentication process, the access device can perform authentication process with multiple authentication servers simultaneously, and the Server-EAP-Message attribute is carried in the Access-Request packet sent to the authentication servers in each round, thereby synchronizing authentication information among multiple authentication servers.

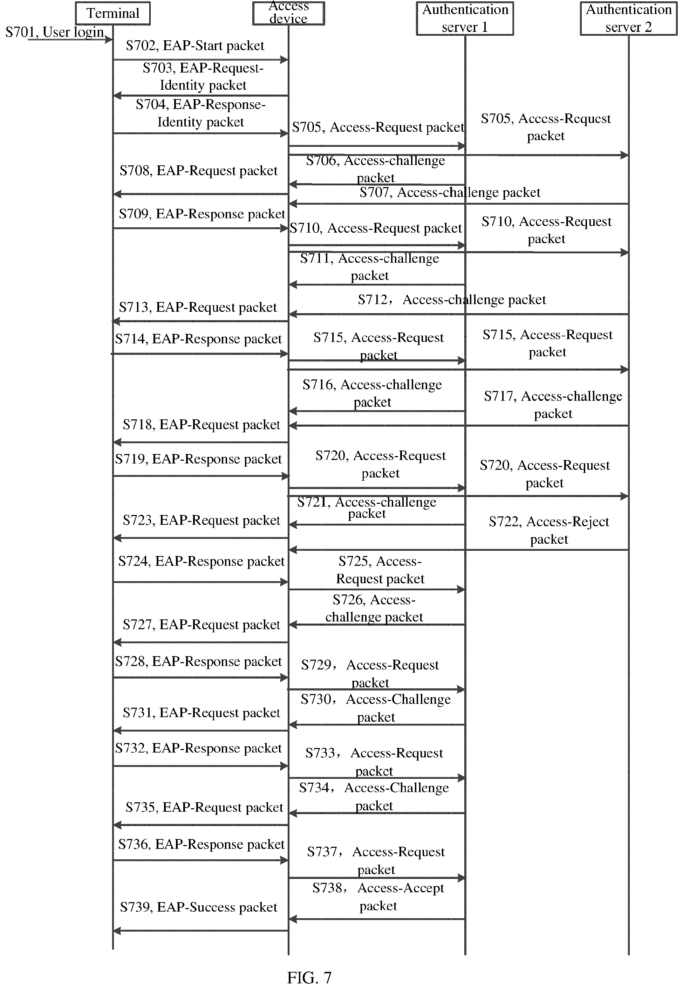

As shown in FIG. 7, the PEAP-MSCHAPv2 authentication process specifically includes the following blocks.

S701, user login.

S702, the terminal sends an EAP-Start packet to the access device, and correspondingly, the access device receives the EAP-Start packet.

The introduction of the Start packet can refer to the relevant description in S502 above, and will not be repeated here.

S703, the access device sends an EAP-Request-Identity packet to the terminal, and correspondingly, the terminal receives the EAP-Request-Identity packet.

The EAP-Request-Identity packet is used to request to obtain a username of the terminal.

S704, the terminal sends an EAP-Response-Identity packet to the access device, and correspondingly, the access device receives the EAP-Response-Identity packet.

For the PEAP-MSCHAPv2 method, the EAP-Response-Identity packet includes an external username of the terminal, and the external username may not be a real username of the user.

S705, the access device sends an Access-Request packet to authentication server 1 and authentication server 2, and correspondingly, authentication server 1 and authentication server 2 receive the Access-Request packet.

The Access-Request packet is a packet encapsulated using the RADIUS protocol. The Access-Request packet includes a Client-EAP-Message attribute, and the Response-Identity packet is encapsulated in the Client-EAP-Message attribute.

In addition, the access device can determine a user table entry corresponding to the terminal based on the MAC address of the terminal, and create a server table in the corresponding user table entry, and the server table is used to store the authentication result fed back by each authentication server.

After receiving the Access-Request packet, authentication server 1 and authentication server 2 can negotiate the authentication mode with the terminal. The specific negotiation mode can refer to the relevant protocol provisions, which is not limited by the example of the present disclosure. Assuming that the authentication mode configured on the authentication server is PEAP-MSCHAPv2, then authentication server 1 executes S706 and authentication server 2 executes S707.

S706, authentication server 1 sends an Access-challenge packet to the access device, and correspondingly, the access device receives the Access-challenge packet.

S707, authentication server 2 sends the Access-challenge packet to the access device, and correspondingly, the access device receives the Access-challenge packet.

The Access-challenge packets sent by authentication server 1 and authentication server 2 are both packets encapsulated using the RADIUS protocol. The Access-challenge packet includes an EAP-Message attribute, and an EAP packet, which carries the PEAP authentication mode, is encapsulated in the EAP-Message attribute.

The PEAP authentication modes carried in EAP packets encapsulated by authentication server 1 and authentication server 2 are different.

The access device can execute S708 after firstly receiving the Access-challenge packet sent by the authentication server. That is, after S706, the access device can execute S708.

S708, the access device sends an EAP-Request packet to the terminal. Correspondingly, the terminal receives the EAP-Request packet.

The EAP-Request packet can be a Request-EAP-PEAP packet, which is used to notify the PEAP authentication mode to the terminal.

S709, the terminal sends an EAP-Response packet to the access device. Correspondingly, the access device receives the EAP-Response packet.

The EAP-Response packet can specifically be a Response-TLS-Client-Hello packet.

If the authentication mode of the terminal is consistent with the PEAP authentication mode notified in the Request-EAP-PEAP packet, the terminal sends the Response-TLS-Client-Hello packet. The Response-TLS-Client-Hello packet is a response packet carrying a TLS Client Hello message, and this response packet is used to trigger negotiation with the authentication server to establish a TLS tunnel.

The TLS-Client-Hello message contains a random number generated by the client.

S710, the access device sends an Access-Request packet to authentication server 1 and authentication server 2, respectively.

After receiving the Response-TLS-Client-Hello packet, the access device encapsulates the Response-TLS-Client-Hello packet into the Client-EAP-Message attribute, and encapsulates the previously recorded Server-EAP-Message attribute into the Access-Request packet, and sends the Access-Request packet to authentication server 1 and authentication server 2.

The authentication server 1 executes S711 after receiving the Access-Request; and the authentication server 2 executes S712 after receiving the Access-Request.

S711, authentication server 1 sends the Access-challenge packet to the access device. Correspondingly, the access device receives the Access-challenge packet.

Authentication server 1 can parse the TLS-Client-Hello packet encapsulated in the Access-Request packet and create a TLS session. The Server Hello1 message, Server Certificate message, and Server Hello Done message are encapsulated in the EAP-Message attribute of the Access-challenge packet and sent to the access device.

The Server Hello1 message contains random number 1 generated by authentication server 1, and authentication server 1 records the random number 1 in the TLS session.

S712, authentication server 2 sends the Access-challenge packet to the access device. Correspondingly, the access device receives the Access-challenge packet.

Authentication server 2 can parse the TLS-Client-Hello packet encapsulated in the Access-Request packet and create a TLS session. The Server Hello2 message, Server Certificate message and Server Hello Done message are encapsulated in the EAP-Message attribute of the Access-challenge packet and sent to the access device.

The Server Hello2 message contains random number 2 generated by authentication server 2, and authentication server 2 records the random number 2 in the TLS session.

The certificates deployed in authentication server 1 and authentication server 2 are the same, and the Server Certificate and Server Hello Done messages encapsulated in authentication server 1 and authentication server 2 are the same. However, the random numbers generated by authentication server 1 and authentication server 2 are different, so the Server Hello1 message and Server Hello2 message are different.

The example of the present disclosure does not limit execution order between S711 and S712. In the example of the present disclosure, as an example, the access device first receives the Access-challenge packet sent by authentication server 2. After receiving the Access-challenge packet sent by authentication server 2, the access device records the EAP-Message attribute in the Access-challenge packet as the Server-EAP-Message 2 attribute and executes S713.

S713, the access device sends an EAP-Request packet to the terminal. Correspondingly, the terminal receives the EAP-Request packet.

The EAP-Request packet includes the above Server-EAP-Message 2 attribute, and the Server-EAP-Message 2 attribute contains the Server Hello2 message and the internal random number 2.

S714, the terminal sends an EAP-Response packet to the access device. Correspondingly, the access device receives the EAP-Response packet.

The EAP-Response packet includes a TLS Client Key Exchange message, Change Cipher Spec message and Encrypted Handshake message, thereby exchanging algorithm and key.

S715, the access device sends an Access-Request packet to authentication server 1 and authentication server 2, respectively.

The Access-Request packet includes a Client-EAP-Message attribute and a Server-EAP-Message2 attribute, and the EAP-Response packet in S714 is encapsulated in the Client-EAP-Message attribute.

Authentication server 1 executes S716 after receiving the Access-Request packet; and the authentication server 2 executes S717 after receiving the Access-Request packet.

S716, authentication server 1 sends the Access-challenge packet to the access device. Correspondingly, the access device receives the Access-challenge packet.

After receiving the Access-Request packet, authentication server 1 parses the Client-EAP-Message attribute and the Server-EAP-Message2 attribute. The Change Cipher Spec message and the Encrypted Handshake message are encapsulated in the Access-Challenge packet, and sent to the access device.

Moreover, if the random number 1 recorded in the local TLS session is different from the random number 2 in the Server Hello2 message in the Server-EAP-Message2 attribute after comparing by authentication server 1, the random number 1 recorded in the local TLS session is replaced with the random number 2.

The terminal and each authentication server will use the random number in the TLS Client Hello message and the random number 2 in the Server Hello2 message to generate symmetric keys and a message authentication code in the handshake message. Both authentication server 1 and authentication server 2 use the same random number 2, and can establish a TLS tunnel with the terminal simultaneously and make the terminal unaware of the existence of two authentication servers.

S717, authentication server 2 sends the Access-challenge packet to the access device. Correspondingly, the access device receives the Access-challenge packet.

After receiving the Access-Request packet, authentication server 2 parses the Client-EAP-Message attribute and the Server-EAP-Message2 attribute. The Change Cipher Spec message and the Encrypted Handshake message are encapsulated in the Access-Challenge packet, and sent to the access device.

Moreover, if the random number 2 recorded in the local TLS session is the same as the random number 2 in the Server Hello2 message in the Server-EAP-Message 2 attribute after comparing by authentication server 2, no replacement is performed.

The examples of the present disclosure do not limit execution order between S716 and S717. After S715, after firstly receiving the Access-challenge packet, the access device records the EAP-Message attribute in the Access-challenge packet as the Server-EAP-Message3 attribute and executes S718.

S718, the access device sends an EAP-Request packet to the terminal. Correspondingly, the terminal receives the EAP-Request packet.

The EAP-Request packet includes the above Server-EAP-Message3 attribute.

S719, the terminal sends an EAP-Response packet to the access device. Correspondingly, the access device receives the EAP-Response packet.

The EAP-Response packet is an EAP-PEAP response packet, and at this point, the TLS tunnel establishment in the first stage of PEAP authentication is completed. Subsequently, the second stage of MSCHAPv2 authentication will begin.

S720, the access device sends an Access-Request packet to authentication server 1 and authentication server 2, respectively.

The Access-Request packet carries a Client-EAP-Message attribute and a Server-EAP-Message3 attribute. The EAP-Response packet in S719 is encapsulated in the Client-EAP-Message attribute.

Authentication server 1 executes S721 after receiving the Access-Request packet; and the authentication server executes S722 after receiving the Access-Request packet.

S721, authentication server 1 sends the Access-challenge packet to the access device. Correspondingly, the access device receives the Access-challenge packet.

Assuming that authentication server 1 is running normally, then authentication server 1 can encapsulate the Access-Challenge packet and send it to the access device. The access device can record the EAP-Message attribute carried in the Access-challenge packet as the Server-EAP-Message4 attribute and execute S723.

S722, authentication server 2 sends an Access-Reject packet to the access device. Correspondingly, the access device receives the Access-Reject packet.

Assuming that an internal component of authentication server 2 fails at this point and terminal authentication is rejected, then the Access-Reject packet can be encapsulated and sent to the access device.

It should be noted that in the entire authentication process, authentication server failure may occur at each stage, causing the authentication server to send the Access-Reject packet to the access device. In this process, as an example, authentication server 2 fails during the second stage of MSCHAPv2 authentication process.

S723, the access device sends an EAP-Request packet to the terminal. Correspondingly, the terminal receives the EAP-Request packet.

The Server-EAP-Message 4 attribute is encapsulated in the EAP-Request packet, and carries the user identity request message encrypted by TLS.

After receiving the Access-Reject packet from authentication server 2, the access device records the authentication result of authentication server 2 as authentication failure, and will not send the Access-Request packet to authentication server 2 in the future.

S724, the terminal sends an EAP-Response packet to the access device. Correspondingly, the access device receives the EAP-Response packet.

The EAP-Response packet carries the user identity information encrypted by TLS, which is an inner username (real username).

S725, the access device sends the Access-Request packet to authentication server 1. Correspondingly, authentication server 1 receives the Access-Request packet.

The Access-Request packet carries a Client-EAP-Message attribute and a Server-EAP-Message4 attribute. The EAP-Response packet in S724 is encapsulated in the Client-EAP-Message attribute.

S726, authentication server 1 sends the Access-challenge packet to the access device. Correspondingly, the access device receives the Access-challenge packet.

Authentication server 1 parses the Client-EAP-Message attribute and Server-EAP-Message4 attribute. Since the authentication information in the Server-EAP-Message 4 attribute is the same as the authentication information recorded locally by authentication server 1, the replacement will not be performed in the future.

The Access-Challenge packet contains authentication sub-mode negotiation information encrypted by TLS. For example, the authentication sub-mode negotiation information is MS-CHAPv2.

S727, the access device sends an EAP-Request packet to the terminal. Correspondingly, the terminal receives the EAP-Request packet.

The EAP-Request packet carries the authentication sub-mode negotiation information encrypted by TLS.

S728, the terminal sends an EAP-Response packet to the access device. Correspondingly, the access device receives the EAP-Response packet.

After receiving the authentication sub-mode negotiation information, if it is confirmed that the authentication sub-mode can be used, the terminal will reply an EAP-Response packet indicating that the authentication sub-mode can be used.

S729, the access device sends an Access-Request packet to authentication server 1. Correspondingly, authentication server 1 receives the Access-Request packet.

S730, authentication server 1 sends the Access-Challenge packet to the access device. Correspondingly, the access device receives the Access-Challenge packet.

Authentication server 1 can generate and record MS-CHAPv2 Challenge information, and encapsulate the MS-CHAPv2 Challenge information into the Access-Challenge packet.

It can be understood that, if authentication server 2 does not fail in the above process, the access device needs to record the EAP-EAP-Message attribute in the Access-Challenge packet as the Server-EAP-Message attribute, in order to synchronize the Server-EAP-Message attribute to authentication server 2 in the future.

S731, the access device sends an EAP-Request packet to the terminal. Correspondingly, the terminal receives the EAP-Request packet.

The EAP-Request packet carries MS-CHAPv2 Challenge information encrypted by TLS.

S732, the terminal sends an EAP-Response packet to the access device. Correspondingly, the access device receives the EAP-Response packet.

After parsing MS-CHAPv2 Challenge, the terminal randomly generates Peer-Challenge, and generates NT-Reponse 1 information by using its own username, password, MS-CHAPv2 Challenge, and Peer-Challenge. The Peer-Challenge and NT-Response1 information are encrypted by TLS and encapsulated into the EAP-Response packet, and sent to the access device.

S733, the access device sends an Access-Request packet to authentication server 1. Correspondingly, authentication server 1 receives the Access-Request packet.

S734, authentication server 1 sends the Access-Challenge packet to the access device. Correspondingly, the access device receives the Access-Challenge packet.

Authentication server 1 parses Peer-Challenge and NT-Reponse1 information, and generates NT-Reponse2 information by using its own recorded MS-CHAPv2 Challenge, username and password combined with the parsed Peer-Challenge information. Then NT-Reponse1 is compared with NT-Reponse2, and if NT-Reponse1 is consistent with NT-Reponse2, it is determined that the user authentication is successful. Then Auth-String1 information is generated based on the username, password, MS-CHAPv2 Challenge, Peer-Challenge and NT-Reponse2, and the Auth-String1 information is encapsulated in the Access-Challenge packet.

S735, the access device sends an EAP-Request packet to the terminal. Correspondingly, the terminal receives the EAP-Request packet. The EAP-Request packet carries the Auth-String1 information.

S736, the terminal sends an EAP-Response packet to the access device. Correspondingly, the access device receives the EAP-Response packet.

The terminal generates Auth-String2 through the same method by using its own recorded NT-Response1, username, password, MS-CHAPv2 Challenge, and Peer-Challenge, and compares the Auth-String2 with the parsed Auth-String1. If the Auth-String2 is consistent with the parsed Auth-String1, the authentication on the terminal on authentication server 1 is successful.

The EAP-Response packet carries the Auth-String2.

S737, the access device sends an Access-Request packet to authentication server 1. Correspondingly, authentication server 1 receives the Access-Request packet.

The Access-Request packet includes a Client-EAP-Message attribute, and the Client-EAP-Message attribute carries the EAP-Response packet in S736.

S738, authentication server 1 sends the Access-Accept packet to the access device. Correspondingly, the access device receives the Access-Accept packet.

Authentication server 1 can parse the Auth-String2 from the Access-Request packet, compare the Auth-String2 with the recorded Auth-String1. If the Auth-String2 is consistent with the recorded Auth-String1, it is determined that the user authentication is passed and authentication server 1 replies the Access-Accept packet.

After receiving the Access-Accept packet, the access device records the authentication result of authentication server 1 as authentication success.

S739, the access device sends an EAP-Success packet to the terminal. Correspondingly, the terminal receives the EAP-Success packet.

Moreover, the access device releases terminal traffic and allows the terminal to access network resources.

It should be noted that the examples of the present disclosure are not limited to the EAP authentication process based on 802.1X, and the method provided in the examples of the present disclosure is also applicable to the EAP relay authentication process of web/portal users based on Http/Https.

It should be noted that in the processes of FIGS. 6 and 7, if the authentication server further generates private data for verifying access device, the authentication server can encapsulate the standard Radius attribute in the Access-challenge packet.

The attribute name of the standard Radius attribute can be a State attribute, the attribute number can be 24, the data type is octets, and the value of the State attribute is the private data mentioned above.

The access device can record the State attribute value carried in the Access-challenge packet sent by each authentication server, respectively. The standard Radius attribute is also encapsulated in the packet sent by the access device to each authentication server subsequently, and the packet carries the State attribute value of the authentication server, so that the authentication server can verify whether the access device is legal based on the State attribute, preventing counterfeit access devices from conducting illegal authentication, so as to improve network security.

In another example of the present disclosure, if the Server-EAP-Message attribute is not used to synchronize the authentication parameter, the EAP relay processing mechanism can also be replaced by the EAP termination processing mechanism, so that only one interaction between the access device and the authentication server is required. In this way, during the access authentication process, the problem of switching authentication servers will not exist, and the problem of access authentication failure due to the fact that the authentication parameter is not synchronized in real time after switching the authentication server, can also be avoided.

The following is a detailed explanation of the implementation of replacing the EAP relay processing mechanism with the EAP termination processing mechanism.

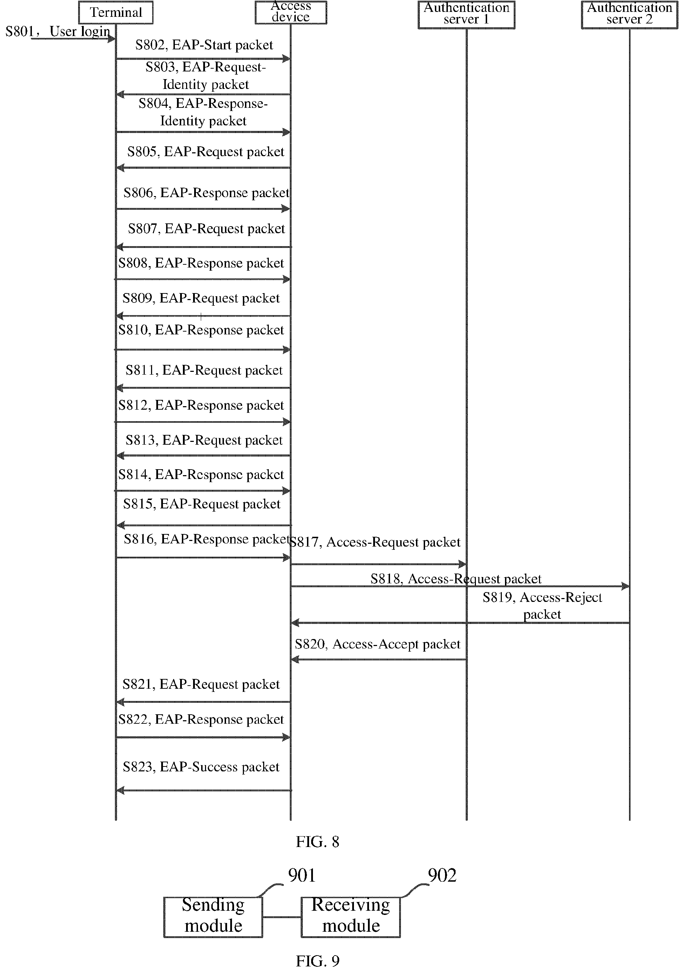

Based on FIG. 7, the EAP relay processing mechanism can be changed to the EAP termination processing mechanism, so that the access device does not need to use the Server-EAP-Message attribute for synchronization of the authentication parameter. As shown in FIG. 8, the process specifically includes the following operations:
S801, user login.
S802, the terminal sends an EAP-Start packet to the access device, and correspondingly, the access device receives the EAP-Start packet.
S803, the access device sends an EAP-Request-Identity packet to the terminal, and correspondingly, the terminal receives the EAP-Request-Identity packet.
S804, the terminal sends an EAP-Response-Identity packet to the access device, and correspondingly, the access device receives the EAP-Response-Identity packet.

In S805-S816, the packets sent by the access device to the terminal are all EAP-Request packets, and the packets sent by the terminal to the access device are all EAP-Response packets.

In S805, the EAP-Request packet can specifically be a Request-EAP-PEAP packet, which is used to notify the PEAP authentication mode to the terminal.

In S806, the EAP-Response packet is specifically a Response-TLS-Client-Hello packet. If the authentication mode of the terminal is consistent with the PEAP authentication mode notified in the Request-EAP-PEAP packet, the terminal replies the Response-TLS-Client-Hello packet. The Response-TLS-Client-Hello packet is used to trigger negotiation with the authentication server to establish a TLS tunnel, and carry the random number information generated by the client.

After receiving the Response-TLS-Client-Hello packet, the access device parses the TLS Client Hello message encapsulated in the Access-Request packet, creates a TLS session, and generates a random number 1, and records the random number 1 in the TLS session information.

In S807, the EAP-Request packet includes a Server Hello message, Server Certificate message, and Server Hello Done message. The Server Hello message includes the random number 1.

In S808, the EAP-Response packet includes TLS Client Key Exchange message, Change Cipher Spec message and Encrypted Handshake message, so as to exchange algorithm and key with the access device.

In S809, the EAP-Request packet includes a hange Cipher Spec message and Encrypted Handshake message.

In S810, the EAP-Response packet is an EAP-PEAP response packet, and at this point, the TLS tunnel has been established between the terminal and the access device in the first stage of PEAP authentication. Subsequently, the second stage of MSCHAPv2 authentication will begin.

In S811, the EAP-Request packet carries the user identity request message encrypted by TLS.

In S812,the EAP-Response packet carries the user identity information encrypted by TLS, which is an inner username (real username).

In S813, the EAP-Request packet carries the authentication sub-mode negotiation information encrypted by TLS. For example, the authentication sub-mode negotiation information is MS-CHAPv2.

In S814, the EAP-Response packet is used to indicate that the terminal can use the authentication sub-mode in S813.

In S815, the EAP-Request packet carries the MS-CHAPv2-Challenge information encrypted by TLS.

In S816, the EAP-Response packet carries Peer-Challenge and NT-Response1 information encrypted by TLS, wherein Peer-Challenge is randomly generated by the terminal, and NT-Reponse1 information is generated by the terminal based on the username, password, MS-CHAPv2-Challenge, and Peer-Challenge.

After obtaining Peer-Challenge and NT-Reponse1 information, the access device encapsulates the EAP-Request packet. Two radius attributes, namely the MS-CHAP-Challenge attribute and the MS-CHAP2-Response attribute, is encapsulated in the EAP-Request packet. MS-CHAPv2-Challenge is encapsulated in the MS-CHAP-Challenge attribute, and Peer-Challenge and NT-Reponse1 information is encapsulated in the MS-CHAP2-Response attribute. Compared to the process in FIG. 7, there is no need to extend the EAP-Message attribute in the Access-Request packet in the process in FIG. 8. Then the access device executes S817 and S818 respectively.

S817, the access device sends an Access-Request packet to authentication server 1, and correspondingly, authentication server 1 receives the Access-Request packet.

The authentication server 1 parses Peer-Challenge and NT-Reponse1 information, and then compares NT-Reponse1 with NT-Reponse2 generated by itself. If NT-Reponse1 is consistent with NT-Reponse2 generated by itself, it is determined that the user authentication is successful. Then Auth-String1 information is generated based on the username, password, MS-CHAPv2-Challenge, Peer-Challenge, and NT-Reponse2, and the Auth-String1 information is encapsulated in the Access-Challenge packet, and then execute S820.

S818, the access device sends an Access-Request packet to authentication server 2, and correspondingly, authentication server 2 receives the Access-Request packet.

Assuming that an internal component of authentication server 2 fails at this point and terminal authentication is rejected, then the Access-Reject packet can be encapsulated and S819 is executed.

S819, authentication server 2 sends the Access-Reject packet to the access device. Correspondingly, the access device receives the Access-Reject packet.

S820, authentication server 1 sends the Access-Accept packet to the access device. Correspondingly, the access device receives the Access-Accept packet.

S821, the access device sends an EAP-Request packet to the terminal. Correspondingly, the terminal receives the EAP-Request packet. The EAP-Request packet carries the Auth-String1 information.

S822, the terminal sends an EAP-Response packet to the access device. Correspondingly, the access device receives the EAP-Response packet.

The terminal generates Auth-String2 through the same method by using its own recorded NT-Response1, username, password, MS-CHAPv2 Challenge and Peer-Challenge, and compares the Auth-String2 with the parsed Auth-String1. If the Auth-String2 is consistent with the parsed Auth-String1, the verification of the terminal on authentication server 1 is successful.

The Access-Request packet carries the Auth-String2. The access device parses the Auth-String2 from the Access-Request packet, and compares the Auth-String2 with the recorded Auth-String1. If the Auth-String2 is consistent with the recorded Auth-String1, it is determined that the user authentication is passed.

S823, the access device sends an EAP-Success packet to the terminal. Correspondingly, the terminal receives the EAP-Success packet.

Moreover, the access device releases terminal traffic and allows the terminal to access network resources.

With the above method, the access device can replace the authentication server to establish a TLS tunnel between it and the terminal. During the authentication process, only one interaction is required between the access device and the authentication server, so it does not involve multiple interactions with different authentication servers, and thus there is no need to synchronize the authentication parameter between the authentication servers, thereby avoiding the problem of terminal online failure caused by server failure.

It should be noted that the processes shown in FIGS. 7 and 8 serve as two exemplary processes provided in the examples of the present disclosure. In FIG. 7, the synchronization of the authentication parameter between authentication servers is achieved by adding the Server-EAP-Message attribute. In FIG. 8, the access device replaces the authentication server to establish a TLS tunnel between it and the terminal, avoiding multiple interactions between the access device and the authentication server.

In FIGS. 7 and 8, after obtaining the information for authentication, the specific authentication methods of the authentication server, access device, and terminal can refer to the relevant protocol provisions of PEAP-MSCHAPv2, which is not limited by the examples of the present disclosure.

Based on the same concept, an example of the present disclosure provides a terminal authentication apparatus, as shown in FIG. 9, wherein the apparatus is applied to an access device, including:
a sending module 901, to send a first packet to each of multiple authentication servers respectively, wherein the first packet is used to request an authentication server to perform access authentication on a terminal;
a receiving module 902, to trigger, if a second packet sent by any one of the authentication servers is received and the second packet is a second packet firstly sent by the multiple authentication servers after receiving the first packet, the sending module 901 to send a third packet to the terminal, wherein the second packet and the third packet are both used to indicate that the access authentication on the terminal is successful.

Optionally, the receiving module 902 is further to trigger, if a fourth packet sent by any one of the authentication servers is received and the fourth packet is a fourth packet firstly sent by the multiple authentication servers after receiving the first packet, the sending module 901 to send a fifth packet to the terminal, wherein the fifth packet includes an authentication parameter and the authentication parameter is carried by an EAP packet included in the fourth packet.
the receiving module 902 is further to receive a sixth packet sent by the terminal, wherein the sixth packet includes user identity information, and the user identity information is encrypted by the authentication parameter;

The sending module 901 is further to send a seventh packet to each of the authentication servers respectively, wherein the seventh packet includes the sixth packet and the EAP packet, to enable the authentication server to verify the user identity information based on the authentication parameter.

Optionally, the apparatus further includes a recording module;
the receiving module 902 is further to trigger, if a same number of eighth packets as that of the multiple authentication servers are received within a first preset duration and an authentication result carried by each of the eighth packets indicates that the access authentication on the terminal is failed, the recording module to respectively record the authentication result of each of the servers for the terminal as access authentication failure;
the sending module 901 is further to send a ninth packet to the terminal, wherein the ninth packet is used to indicate that the access authentication on the terminal is failed.

Optionally, the recording module is further to respectively record, if no packet sent by any one of the authentication servers is received after expiration of the first preset duration, the authentication result of each of the servers for the terminal as the authentication server being unreachable.

The sending module 901 is further to send a ninth packet to the terminal, wherein the ninth packet is used to indicate that the access authentication on the terminal is failed.

Optionally, the receiving module 902 is further to trigger, if eighth packets sent by a first number of authentication servers are received within the first preset duration and an authentication result carried by each of the eighth packets indicates that the access authentication on the terminal is failed, the recording module to respectively record authentication results of the first number of authentication servers for the terminal as access authentication failure.

The recording module is further to respectively record, if packets sent by a second number of authentication servers in the multiple authentication servers have not been received after expiration of the first preset duration, authentication results of the second number of authentication servers for the terminal as the authentication server being unreachable.

The sending module 901 is further to send a ninth packet or a tenth packet to the terminal, wherein the ninth packet is used to indicate that the access authentication on the terminal is failed, and the tenth packet is used to indicate that the access authentication on the terminal is successful, and a sum of the first number and the second number is the same as the number of the multiple authentication servers.

Optionally, the receiving module 902 is further to trigger, if a same number of eighth packets as that of the multiple authentication servers are received within a second preset duration and an authentication result carried by each of the eighth packets indicates that the access authentication on the terminal is failed, the recording module to respectively record the authentication result of each of the servers for the terminal as access authentication failure.

The sending module 901 is further to send a ninth packet to the terminal, wherein the ninth packet is used to indicate that the access authentication on the terminal is failed.

Optionally, the recording module is further to respectively record, if no packet sent by any one authentication server is received after expiration of the second preset duration, the authentication result of each of the servers for the terminal as the authentication server being unreachable.

The sending module 901 is further to send a ninth packet to the terminal, wherein the ninth packet is used to indicate that the access authentication on the terminal is failed.

Optionally, the receiving module 902 is further to trigger, if eighth packets sent by a third number of authentication servers are received within a second preset duration and an authentication result carried by each of the eighth packets indicate that the access authentication on the terminal is failed, the recording module to respectively record authentication results of the third number of authentication servers for the terminal as access authentication failure.

The recording module is further to respectively record, if packets sent by a fourth number of authentication servers in the multiple authentication servers have not been received after expiration of the second preset duration, authentication results of the fourth number of authentication servers for the terminal as the authentication server being unreachable.

The sending module 901 is further to send a ninth packet or a tenth packet to the terminal, wherein the ninth packet is used to indicate that the access authentication on the terminal is failed, and the tenth packet is used to indicate that the access authentication on the terminal is successful, and a sum of the third number and the fourth number is the same as the number of the multiple authentication servers.

Optionally, the seventh packet includes an EAP-Message attribute, and the EAP-Message attribute is used to carry the EAP packet.

Optionally, the EAP-Message attribute has a preset length.

If the length of the EAP packet is greater than the preset length, the seventh packet includes multiple EAP-Message attributes, and the EAP packet is carried in the multiple EAP-Message attributes in a form of fragmentation.

Optionally, the access device is connected to multiple sets of authentication servers.

The sending module 901 is further to select a set of authentication servers from the multiple sets of authentication servers in a load-sharing manner, and send the first packet to the selected set of authentication servers; or,
select a preset number of authentication servers from each set of the multiple sets of authentication servers respectively in a load-sharing manner, and send the first packet to the selected authentication servers.

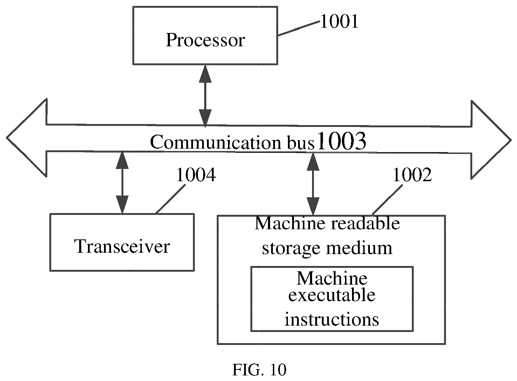

Based on the same concept, an example of the present disclosure provides an access device, as shown in FIG. 10, the access device including:
a processor 1001;
a transceiver 1004;
a machine readable storage medium 1002, storing machine executable instructions therein, the machine executable instructions, when executed by the processor 1001, cause the processor 1001 to perform following operations:
   sending a first packet to each of multiple authentication servers through the transceiver 1004 respectively, wherein the first packet is used to request an authentication server to perform access authentication on a terminal.

If a second packet sent by any one of the authentication servers is received through the transceiver 1004 and the second packet is a second packet firstly sent by multiple authentication servers after receiving the first packet, sending a third packet to the terminal through the transceiver 1004, wherein the second packet and the third packet are both used to indicate that the access authentication on the terminal is successful.

Optionally, the machine executable instructions further cause the processor 1001 to perform following operations:
if a fourth packet sent by any one of the authentication servers is received through the transceiver 1004 and the fourth packet is a fourth packet firstly sent by the multiple authentication servers after receiving the first packet, sending a fifth packet to the terminal through the transceiver 1004, wherein the fifth packet includes an authentication parameter and the authentication parameter is carried by an EAP packet included in the fourth packet;
receiving a sixth packet sent by the terminal through the transceiver 1004, wherein the sixth packet includes user identity information, and the user identity information is encrypted by the authentication parameter;
sending a seventh packet to each of the authentication servers through the transceiver 1004, wherein the seventh packet includes the sixth packet and the EAP packet, to enable the authentication server to verify the user identity information based on the authentication parameter.

Optionally, the machine executable instructions further cause the processor 1001 to perform following operations:
if a same number of eighth packets with that of authentication servers are received through the transceiver 1004 within a first preset duration and an authentication result carried by each of the eighth packets indicates that the access authentication on the terminal is failed, respectively recording the authentication result of each of the servers for the terminal as access authentication failure;
sending a ninth packet to the terminal through the transceiver 1004, wherein the ninth packet is used to indicate that the access authentication on the terminal is failed.

Optionally, the machine executable instructions further cause the processor 1001 to perform following operations:
if no packet sent by any one of the authentication servers is received after expiration of the first preset duration, respectively recording the authentication result of each of the servers for the terminal as the authentication server being unreachable;
sending a ninth packet to the terminal through the transceiver 1004, wherein the ninth packet is used to indicate that the access authentication on the terminal is failed.

Optionally, the machine executable instructions further cause the processor 1001 to perform following operations:
if eighth packets sent by a first number of authentication servers are received through the transceiver 1004 within a first preset duration and an authentication result carried by each of the eighth packets indicates that the access authentication on the terminal is failed, respectively recording authentication results of the first number of authentication servers for the terminal as access authentication failure;
if packets sent by a second number of authentication servers in the multiple authentication servers have not been received after expiration of the first preset duration, respectively recording authentication results of the second number of authentication servers for the terminal as the authentication server being unreachable;
sending a ninth packet or a tenth packet to the terminal through the transceiver 1004, wherein the ninth packet is used to indicate that the access authentication on the terminal is failed, and the tenth packet is used to indicate that the access authentication on the terminal is successful, and a sum of the first number and the second number is the same as the number of the multiple authentication servers.

Optionally, the machine executable instructions further cause the processor 1001 to perform following operations:
if a same number of eighth packets as that of the multiple authentication servers are received through the transceiver 1004 within a second preset duration and an authentication result carried by each of the eighth packets indicates that the access authentication on the terminal is failed, respectively recording the authentication result of each of the servers for the terminal as access authentication failure;
sending a ninth packet to the terminal through the transceiver 1004, wherein the ninth packet is used to indicate that the access authentication on the terminal is failed.

Optionally, the machine executable instructions further cause the processor 1001 to perform following operations:
if no packet sent by any one of the authentication servers is received after expiration of the second preset duration, respectively recording the authentication result of each of the servers for the terminal as the authentication server being unreachable;
sending a ninth packet to the terminal through the transceiver 1004, wherein the ninth packet is used to indicate that the access authentication on the terminal is failed.

Optionally, the machine executable instructions further cause the processor 1001 to perform following operations:
if eighth packets sent by a third number of authentication servers are received through the transceiver 1004 within a second preset duration and an authentication result carried by each of the eighth packets indicates that the access authentication on the terminal is failed, respectively recording authentication results of the third number of authentication servers for the terminal as access authentication failure;
if packets sent by a fourth number of authentication servers in the multiple authentication servers have not been received after expiration of the second preset duration, respectively recording authentication results of the fourth number of authentication servers for the terminal as the authentication server being unreachable;
sending a ninth packet or a tenth packet to the terminal through the transceiver 1004, wherein the ninth packet is used to indicate that the access authentication on the terminal is failed, and the tenth packet is used to indicate that the access authentication on the terminal is successful, and a sum of the third number and the fourth number is the same as the number of the multiple authentication servers.

Optionally, the seventh packet includes an EAP-Message attribute, and the EAP-Message attribute is used to carry the EAP packet.

Optionally, the EAP-Message attribute has a preset length.

If the length of the EAP packet is greater than the preset length, the seventh packet includes multiple EAP-Message attributes, and the EAP packet is carried in the multiple EAP-Message attributes in a form of fragmentation.

Optionally, the access device is connected to multiple sets of authentication servers; the machine executable instructions cause the processor 1001 to execute following operations:
selecting a set of authentication servers from the multiple sets of authentication servers in a load-sharing manner, and sending the first packet to a selected set of authentication servers through the transceiver 1004; or,
selecting a preset number of authentication servers from each set of the multiple sets of authentication servers respectively in a load-sharing manner, and sending the first packet to a selected authentication servers through the transceiver 1004.

In FIG. 10, it can also include a communication bus 1003. The processor 1001, the machine readable storage medium 1002 and the transceiver 1004 communicate with each other through the communication bus 1003. The communication bus 1003 can be a Peripheral Component Interconnect (PCI) bus or an Extended Industry Standard Architecture (EISA) bus, etc. The communication bus can be divided into address bus, data bus, control bus, etc.

The transceiver 1004 can be a wireless communication module. The transceiver 1004 performs data interaction with other devices under the control of the processor 1001.

The machine readable storage medium 1002 may include either Random Access Memory (RAM) or Non-Volatile Memory (NVM), such as at least one disk memory. In addition, the machine-readable storage medium can also be at least one storage device located far from the above described processor.

The processor 1001 can be a general-purpose processor, including a Central Processing Unit (CPU), a Network Processor (NP), etc.; or can also be a Digital Signal Processing (DSP), Application Specific Integrated Circuit (ASIC), Field-Programmable Gate Array (FPGA) or other programmable logic devices, discrete gates or transistor logic devices, or discrete hardware components.

Based on the same invention concept, according to the terminal authentication method provided in the above examples of the present disclosure, an example of the present disclosure also provides a machine readable storage medium having machine executable instructions stored therein, the machine executable instructions can be executed by the processor. The machine executable instructions cause the processor to carry out blocks of the above described terminal authentication method.

In another example provided by the present disclosure, it is also provided a computer program product containing instructions which, when running on a computer, cause the computer to carry out the blocks of the terminal authentication method in the above examples.

It should be noted that in this article, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the example of the apparatus, the description is relatively simple because it is basically similar to the example of the method, and the relevant points can be referred to the partial description of the example of the method.

## Claims

1. A terminal authentication method, which is applied to an access device, comprising:
sending (S507, S605) a first packet to each of multiple authentication servers respectively, wherein the first packet is used to request an authentication server to perform access authentication on a terminal; and
in response to determining (S508, S611) that a second packet sent by any one of the authentication servers after receiving the first packet is received and the second packet is a second packet firstly received by the access device, sending (S510, S613) a third packet to the terminal, wherein the second packet and the third packet are both used to indicate that the access authentication on the terminal is successful;
after sending (S507, S605) a first packet to each of multiple authentication servers, the method further comprises:
in response to determining (S606, S607) that a fourth packet sent by any one of the authentication servers after receiving the first packet is received and the fourth packet is a fourth packet firstly received by the access device, sending (S608) a fifth packet to the terminal, wherein the fifth packet comprises an authentication parameter, and the authentication parameter is carried by an EAP packet comprised in the fourth packet;
receiving (S609) a sixth packet sent by the terminal, wherein the sixth packet comprises user identity information, and the user identity information is encrypted by the authentication parameter; and
sending (S610) a seventh packet to each of the authentication servers respectively, wherein the seventh packet comprises the sixth packet and the EAP packet, to enable the authentication server to verify the user identity information based on the authentication parameter.

2. The method of claim 1, wherein after sending (S507, S605) a first packet to each of multiple authentication servers, the method further comprises:
in response to determining (S509, S612) that a same number of eighth packets as that of the multiple authentication servers are received within a first preset duration and an authentication result carried by each of the eighth packets indicates that the access authentication on the terminal is failed, respectively recording the authentication result of each of the servers for the terminal as access authentication failure; and
sending a ninth packet to the terminal, wherein the ninth packet is used to indicate that the access authentication on the terminal is failed.

3. The method of claim 1, wherein after sending (S507, S605) a first packet to each of multiple authentication servers, the method further comprises:
in response to determining that no packet sent by any one of the authentication servers is received after expiration of a first preset duration, respectively recording an authentication result of each of the servers for the terminal as authentication server being unreachable; and
sending a ninth packet to the terminal, wherein the ninth packet is used to indicate that the access authentication on the terminal is failed.

4. The method of claim 1, wherein after sending (S507, S605) a first packet to each of multiple authentication servers, the method further comprises:
in response to determining that eighth packets sent by a first number of authentication servers are received within a first preset duration and an authentication result carried by each of the eighth packets indicates that the access authentication on the terminal is failed, respectively recording authentication results of the first number of authentication servers on the terminal as access authentication failure;
in response to determining that packets sent by a second number of authentication servers in the multiple authentication servers have not been received after expiration of the first preset duration, respectively recording authentication results of the second number of authentication servers for the terminal as authentication server being unreachable; and
sending a ninth packet or a tenth packet to the terminal, wherein the ninth packet is used to indicate that the access authentication on the terminal is failed, and the tenth packet is used to indicate that the access authentication on the terminal is successful, and a sum of the first number and the second number is the same as the number of the multiple authentication servers.

5. The method of claim 1, wherein after sending (S507, S605) a first packet to each of multiple authentication servers, the method further comprises:
in response to determining that a same number of eighth packets as that of the multiple authentication servers are received within a second preset duration and an authentication result carried by each of the eighth packets indicates that the access authentication on the terminal is failed, respectively recording an authentication result of each of the servers for the terminal as access authentication failure; and
sending a ninth packet to the terminal, wherein the ninth packet is used to indicate that the access authentication on the terminal is failed.

6. The method of claim 1, wherein after sending (S507, S605) a first packet to each of multiple authentication servers, the method further comprises:
in response to determining that no packet sent by any one of the authentication servers is received after expiration of a second preset duration, respectively recording an authentication result of each of the servers for the terminal as authentication server being unreachable; and
sending a ninth packet to the terminal, wherein the ninth packet is used to indicate that the access authentication on the terminal is failed.

7. The method of claim 1, wherein after sending (S507, S605) a first packet to each of multiple authentication servers, the method further comprises:
in response to determining that eighth packets sent by a third number of authentication servers are received within a second preset duration and an authentication result carried by each of the eighth packets indicates that the access authentication on the terminal is failed, respectively recording authentication results of the third number of authentication servers for the terminal as access authentication failure;
in response to determining that packets sent by a fourth number of authentication servers in the multiple authentication servers have not been received after expiration of the second preset duration, respectively recording authentication results of the fourth number of authentication servers for the terminal as authentication server being unreachable; and
sending a ninth packet or a tenth packet to the terminal, wherein the ninth packet is used to indicate that the access authentication on the terminal is failed, and the tenth packet is used to indicate that the access authentication on the terminal is successful, and a sum of the third number and the fourth number is the same as the number of the multiple authentication servers.

8. The method of claim 1, wherein the seventh packet comprises an EAP-Message attribute, and the EAP-Message attribute is used to carry the EAP packet.

9. The method of claim 8, wherein the EAP-Message attribute has a preset length; and in response to determining that the length of the EAP packet is greater than the preset length, the seventh packet comprises multiple EAP-Message attributes, and the EAP packet is carried in the multiple EAP-Message attributes in a form of fragmentation.

10. The method of claim 1, wherein the access device is connected to multiple sets of authentication servers; and the sending (S507, S605) a first packet to each of multiple authentication servers comprises:
selecting a set of authentication servers from the multiple sets of authentication servers in a load-sharing manner, and sending the first packet to the selected set of authentication servers; or,
selecting a preset number of authentication servers from each set of the multiple sets of authentication servers respectively in a load-sharing manner, and sending the first packet to the selected authentication servers.

11. An access device, wherein the access device comprises:
a processor (1001);
a transceiver (1004);
a machine readable storage medium (1002) having machine executable instructions stored therein, wherein the machine executable instructions can be executed by the processor (1001) to cause the processor (1001) to carry out the methods of any one of claims 1-10.

12. A machine readable storage medium (1002) having machine executable instructions stored therein, wherein the machine executable instructions, when called and executed by a processor (1001), cause the processor (1001) to carry out the method of any one of claims 1-10.

13. A computer program product, wherein the computer program product causes a processor (1001) to carry out the method of any one of claims 1-10.

## Patentansprüche

1. Verfahren zur Endgeräteauthentifizierung, das auf eine Vorrichtung angewendet wird, die ein Zugangsgerät ist, wobei das Verfahren aufweist:
Senden (S507, S605) eines ersten Pakets an jeden von mehreren Authentifizierungsservern, wobei das erste Paket dazu dient, einen Authentifizierungsserver aufzufordern, eine Zugangsauthentifizierung an einem Endgerät durchzuführen; und
als Reaktion auf eine Feststellung (S508, S611), dass ein zweites Paket, das von einem der Authentifizierungsserver nach dem Empfang des ersten Pakets gesendet wurde, empfangen wurde und das zweite Paket ein zweites Paket ist, das zuerst von der Zugangsvorrichtung empfangen wurde, Senden (S510, S613) eines dritten Pakets an das Endgerät, wobei das zweite Paket und das dritte Paket beide dazu dienen, anzuzeigen, dass die Zugangsauthentifizierung am Endgerät erfolgreich war;
nach dem Senden (S507, S605) eines ersten Pakets an jeden der mehreren Authentifizierungsserver weist das Verfahren ferner Folgendes:
als Reaktion auf eine Feststellung (S606, S607), dass ein viertes Paket, das von einem der Authentifizierungsserver nach dem Empfang des ersten Pakets gesendet wurde, empfangen wurde und das vierte Paket ein viertes Paket ist, das zuerst von der Zugangsvorrichtung empfangen wurde, Senden (S608) eines fünften Pakets an das Endgerät, wobei das fünfte Paket einen Authentifizierungsparameter aufweist und der Authentifizierungsparameter von einem im vierten Paket enthaltenen EAP-Paket übertragen wird;
Empfangen (S609) eines sechsten Pakets, das vom Endgerät gesendet wurde, wobei das sechste Paket Benutzeridentitätsinformationen aufweist und die Benutzeridentitätsinformationen durch den Authentifizierungsparameter verschlüsselt sind; und
Senden (S610) eines siebten Pakets an jeden der Authentifizierungsserver, wobei das siebte Paket das sechste Paket und das EAP-Paket aufweist, um es dem Authentifizierungsserver zu ermöglichen, die Informationen zum Nutzer-Identity auf der Grundlage des Parameters zu verifizieren.

2. Verfahren nach Anspruch 1, wobei das Verfahren nach dem Senden (S507, S605) eines ersten Pakets an jeden der mehreren Authentifizierungsserver ferner aufweist:
als Reaktion auf die Feststellung (S509, S612), dass innerhalb einer ersten voreingestellten Dauer eine Anzahl an achten Paketen empfangen wird, die der Anzahl der mehreren Authentifizierungsserver entspricht, und ein von jedem der achten Pakete übertragendes Authentifizierungsergebnis anzeigt, dass die Zugriffsauthentifizierung auf dem Endgerät fehlgeschlagen ist, das jeweilige Authentifizierungsergebnis jedes der Server für das Endgerät als fehlgeschlagene Zugriffsauthentifizierung zu protokollieren; und
Senden eines neunten Pakets an das Endgerät, wobei das neunte Paket dazu dient, anzuzeigen, dass die Zugriffsauthentifizierung auf dem Endgerät fehlgeschlagen ist.

3. Verfahren nach Anspruch 1, wobei das Verfahren nach dem Senden (S507, S605) eines ersten Pakets an jeden der mehreren Authentifizierungsserver ferner aufweist:
als Reaktion auf die Feststellung, dass nach Ablauf einer ersten voreingestellten Dauer kein von einem der Authentifizierungsserver gesendetes Paket empfangen wurde, jeweils ein Authentifizierungsergebnis jedes der Server für das Endgerät als "Authentifizierungsserver nicht erreichbar" zu protokollieren; und
Senden eines neunten Pakets an das Endgerät, wobei das neunte Paket dazu dient, anzuzeigen, dass die Zugriffsauthentifizierung auf dem Endgerät fehlgeschlagen ist.

4. Verfahren nach Anspruch 1, wobei das Verfahren nach dem Senden (S507, S605) eines ersten Pakets an jeden der mehreren Authentifizierungsserver ferner aufweist:
als Reaktion auf die Feststellung, dass von einer ersten Anzahl von Authentifizierungsservern gesendete achte Pakete innerhalb einer ersten voreingestellten Zeitspanne empfangen werden und ein von jedem der achten Pakete übertragene Authentifizierungsergebnis anzeigt, dass die Zugriffsauthentifizierung auf dem Endgerät fehlgeschlagen ist, jeweils Aufzeichnen der Authentifizierungsergebnisse der ersten Anzahl von Authentifizierungsservern auf dem Endgerät als fehlgeschlagene Zugriffsauthentifizierung;
als Reaktion auf die Feststellung, dass von einer zweiten Anzahl von Authentifizierungsservern unter den mehreren Authentifizierungsservern gesendete Pakete nach Ablauf der ersten voreingestellten Dauer nicht empfangen wurden, das jeweilige Aufzeichnen der Authentifizierungsergebnisse der zweiten Anzahl von Authentifizierungsservern für das Endgerät als "Authentifizierungsserver nicht erreichbar"; und
Senden eines neunten Pakets oder eines zehnten Pakets an das Endgerät, wobei das neunte Paket dazu dient, anzuzeigen, dass die Zugriffsauthentifizierung auf dem Endgerät fehlgeschlagen ist, und das zehnte Paket dazu dient, anzuzeigen, dass die Zugriffsauthentifizierung auf dem Endgerät erfolgreich ist, und wobei die Summe der ersten Anzahl und der zweiten Anzahl der Anzahl der mehreren Authentifizierungsserver entspricht.

5. Verfahren nach Anspruch 1, wobei das Verfahren nach dem Senden (S507, S605) eines ersten Pakets an jeden der mehreren Authentifizierungsserver ferner aufweist:
als Reaktion darauf, dass innerhalb einer zweiten voreingestellten Zeitspanne eine Anzahl von achten Paketen empfangen wird, die der Anzahl der mehreren Authentifizierungsserver entspricht, und dass ein in jedem der achten Pakete enthaltenes Authentifizierungsergebnis anzeigt, dass die Zugriffsauthentifizierung auf dem Endgerät fehlgeschlagen ist, wird das Authentifizierungsergebnis jedes der Server für das Endgerät als fehlgeschlagene Zugriffsauthentifizierung aufgezeichnet; und
Senden eines neunten Pakets an das Endgerät, wobei das neunte Paket dazu dient, anzuzeigen, dass die Zugriffsauthentifizierung auf dem Endgerät fehlgeschlagen ist.

6. Verfahren nach Anspruch 1, wobei das Verfahren nach dem Senden (S507, S605) eines ersten Pakets an jeden der mehreren Authentifizierungsserver ferner aufweist:
als Reaktion auf die Feststellung, dass nach Ablauf einer zweiten voreingestellten Dauer kein von einem der Authentifizierungsserver gesendetes Paket empfangen wurde, jeweils ein Authentifizierungsergebnis jedes der Server f ü r das Endgerät als "Authentifizierungsserver nicht erreichbar" zu protokollieren; und
Senden eines neunten Pakets an das Endgerät, wobei das neunte Paket dazu dient, anzuzeigen, dass die Zugriffsauthentifizierung auf dem Endgerät fehlgeschlagen ist.

7. Verfahren nach Anspruch 1, wobei das Verfahren nach dem Senden (S507, S605) eines ersten Pakets an jeden der mehreren Authentifizierungsserver ferner aufweist:
als Reaktion auf die Feststellung, dass von einer dritten Anzahl von Authentifizierungsservern gesendete achte Pakete innerhalb einer zweiten voreingestellten Zeitspanne empfangen werden und ein von jedem der achten Pakete übertragene Authentifizierungsergebnis anzeigt, dass die Zugriffsauthentifizierung auf dem Endgerät fehlgeschlagen ist, jeweils die Authentifizierungsergebnisse der dritten Anzahl von Authentifizierungsservern für das Endgerät als fehlgeschlagene Zugriffsauthentifizierung zu protokollieren;
als Reaktion auf die Feststellung, dass von einer vierten Anzahl von Authentifizierungsservern unter den mehreren Authentifizierungsservern gesendete Pakete nach Ablauf der zweiten voreingestellten Zeitspanne nicht empfangen wurden, das jeweilige Aufzeichnen der Authentifizierungsergebnisse der vierten Anzahl von Authentifizierungsservern f ü r das Endgerät als "Authentifizierungsserver nicht erreichbar"; und
Senden eines neunten Pakets oder eines zehnten Pakets an das Endgerät, wobei das neunte Paket verwendet wird, um anzuzeigen, dass die Zugriffsauthentifizierung auf dem Endgerät fehlgeschlagen ist, und das zehnte Paket verwendet wird, um anzuzeigen, dass die Zugriffsauthentifizierung auf dem Endgerät erfolgreich ist, und wobei die Summe der dritten Anzahl und der vierten Anzahl mit der Anzahl der mehreren Authentifizierungsserver übereinstimmt.

8. Verfahren nach Anspruch 1, wobei das siebte Paket ein EAP-Message-Attribut aufweist und das EAP-Message-Attribut dazu dient, das EAP-Paket zu übertragen.

9. Verfahren nach Anspruch 8, wobei das EAP-Message-Attribut eine voreingestellte Länge aufweist; und
als Reaktion auf die Feststellung, dass die Länge des EAP-Pakets größer ist als die voreingestellte Länge, das siebte Paket mehrere EAP-Message-Attribute aufweist und das EAP-Paket in den mehreren EAP-Message-Attributen in Form einer Fragmentierung übertragen wird.

10. Verfahren nach Anspruch 1, wobei die Vorrichtung mit mehreren Gruppen von Authentifizierungsservern verbunden ist; und das Senden (S507, S605) eines ersten Pakets an jeden der mehreren Authentifizierungsserver aufweist:
Auswählen einer Gruppe von Authentifizierungsservern aus den mehreren Gruppen von Authentifizierungsservern in einer Lastverteilungsweise und Senden des ersten Pakets an die ausgewählte Gruppe von Authentifizierungsservern; oder
Auswählen einer voreingestellten Anzahl von Authentifizierungsservern aus jeder Gruppe der mehreren Gruppen von Authentifizierungsservern jeweils in einer Lastverteilungsweise und Senden des ersten Pakets an die ausgewählten Authentifizierungsserver.

11. Zugangsvorrichtung, wobei die Zugangsvorrichtung aufweist:
einen Prozessor (1001);
einen Transceiver (1004);
ein maschinenlesbares Speichermedium (1002), in dem maschinenausführbare Anweisungen gespeichert sind, wobei die maschinenausführbaren Anweisungen en vom Prozessor (1001) ausgeführt werden können, um den Prozessor (1001) zu veranlassen, die Verfahren gemäß einem der Ansprüche 1 bis 10 durchzuführen.

12. Maschinenlesbares Speichermedium (1002), auf dem maschinenausführbare Anweisungen gespeichert sind, wobei die maschinenausführbaren Anweisungen, wenn sie von einem Prozessor (1001) aufgerufen und ausgeführt werden, bewirken, dass der Prozessor (1001) das Verfahren nach einem der Ansprüche 1 bis 10 ausführt.

13. Computerprogrammprodukt, wobei das Computerprogrammprodukt einen Prozessor (1001) veranlasst, das Verfahren nach einem der Ansprüche 1 bis 10 auszuführen.

## Revendications

1. Procédé d'authentification de terminal, qui est appliqué à un dispositif d'accès, comprenant :
l'envoi (S507, S605) d'un premier paquet à chacun de multiples serveurs d'authentification respectivement, dans lequel le premier paquet est utilisé pour demander à un serveur d'authentification d'effectuer une authentification d'accès sur un terminal ; et
en réponse à la détermination (S508, S611) qu'un deuxième paquet envoyé par l'un quelconque des serveurs d'authentification après réception du premier paquet est reçu et que le deuxième paquet est un deuxième paquet reçu en premier par le dispositif d'accès, l'envoi (S510, S613) d'un troisième paquet au terminal, dans lequel le deuxième paquet et le troisième paquet sont tous deux utilisés pour indiquer que l'authentification d'accès sur le terminal est réussie ;
après l'envoi (S507, S605) d'un premier paquet à chacun de multiples serveurs d'authentification, le procédé comprend en outre :
en réponse à la détermination (S606, S607) qu'un quatrième paquet envoyé par l'un quelconque des serveurs d'authentification après réception du premier paquet est reçu et que le quatrième paquet est un quatrième paquet reçu en premier par le dispositif d'accès, l'envoi (S608) d'un cinquième paquet au terminal, dans lequel le cinquième paquet comprend un paramètre d'authentification, et le paramètre d'authentification est transporté par un paquet EAP contenu dans le quatrième paquet ;
la réception (S609) d'un sixième paquet envoyé par le terminal, dans lequel le sixième paquet comprend des informations d'identité d'utilisateur, et les informations d'identité d'utilisateur sont chiffrées par le paramètre d'authentification ; et
l'envoi (S610) d'un septième paquet à chacun des serveurs d'authentification respectivement, dans lequel le septième paquet comprend le sixième paquet et le paquet EAP, afin de permettre au serveur d'authentification de vérifier les informations d'identité d'utilisateur sur la base du paramètre d'authentification.

2. Procédé selon la revendication 1, dans lequel, après l'envoi (S507, S605) d'un premier paquet à chacun de multiples serveurs d'authentification, le procédé comprend en outre :
en réponse à la détermination (S509, S612) qu'un même nombre de huitièmes paquets que celui des multiples serveurs d'authentification est reçu dans une première durée prédéfinie et qu'un résultat d'authentification transporté par chacun des huitièmes paquets indique que l'authentification d'accès sur le terminal a échoué, l'enregistrement, respectivement, du résultat d'authentification de chacun des serveurs pour le terminal en tant qu'échec de l'authentification d'accès ; et
l'envoi d'un neuvième paquet au terminal, dans lequel le neuvième paquet est utilisé pour indiquer que l'authentification d'accès sur le terminal a échoué.

3. Procédé selon la revendication 1, dans lequel, après l'envoi (S507, S605) d'un premier paquet à chacun de multiples serveurs d'authentification, le procédé comprend en outre :
en réponse à la détermination qu'aucun paquet envoyé par l'un quelconque des serveurs d'authentification n'est reçu après l'expiration d'une première durée prédéfinie, l'enregistrement, respectivement, d'un résultat d'authentification de chacun des serveurs pour le terminal en tant que serveur d'authentification inaccessible ; et
l'envoi d'un neuvième paquet au terminal, dans lequel le neuvième paquet est utilisé pour indiquer que l'authentification d'accès sur le terminal a échoué.

4. Procédé selon la revendication 1, dans lequel, après l'envoi (S507, S605) d'un premier paquet à chacun de multiples serveurs d'authentification, le procédé comprend en outre :
en réponse à la détermination que des huitièmes paquets envoyés par un premier nombre de serveurs d'authentification sont reçus dans une première durée prédéfinie et qu'un résultat d'authentification transporté par chacun des huitièmes paquets indique que l'authentification d'accès sur le terminal a échoué, l'enregistrement, respectivement, de résultats d'authentification du premier nombre de serveurs d'authentification sur le terminal en tant qu'échec de l'authentification d'accès ;
en réponse à la détermination que des paquets envoyés par un deuxième nombre de serveurs d'authentification parmi les multiples serveurs d'authentification n'ont pas été reçus après l'expiration de la première durée prédéfinie, l'enregistrement, respectivement, de résultats d'authentification du deuxième nombre de serveurs d'authentification pour le terminal en tant que serveur d'authentification inaccessible ; et
l'envoi d'un neuvième paquet ou d'un dixième paquet au terminal, dans lequel le neuvième paquet est utilisé pour indiquer que l'authentification d'accès sur le terminal a échoué, et le dixième paquet est utilisé pour indiquer que l'authentification d'accès sur le terminal a réussi, et une somme du premier nombre et du deuxième nombre est égale au nombre des multiples serveurs d'authentification.

5. Procédé selon la revendication 1, dans lequel, après l'envoi (S507, S605) d'un premier paquet à chacun de multiples serveurs d'authentification, le procédé comprend en outre :
en réponse à la détermination qu'un même nombre de huitièmes paquets que celui des multiples serveurs d'authentification est reçu dans une seconde durée prédéfinie et qu'un résultat d'authentification transporté par chacun des huitièmes paquets indique que l'authentification d'accès sur le terminal a échoué, l'enregistrement, respectivement, d'un résultat d'authentification de chacun des serveurs pour le terminal en tant qu'échec de l'authentification d'accès ; et
l'envoi d'un neuvième paquet au terminal, dans lequel le neuvième paquet est utilisé pour indiquer que l'authentification d'accès sur le terminal a échoué.

6. Procédé selon la revendication 1, dans lequel, après l'envoi (S507, S605) d'un premier paquet à chacun de multiples serveurs d'authentification, le procédé comprend en outre :
en réponse à la détermination qu'aucun paquet envoyé par l'un quelconque des serveurs d'authentification n'est reçu après l'expiration d'une seconde durée prédéfinie, l'enregistrement, respectivement, d'un résultat d'authentification de chacun des serveurs pour le terminal en tant que serveur d'authentification inaccessible ; et
l'envoi d'un neuvième paquet au terminal, dans lequel le neuvième paquet est utilisé pour indiquer que l'authentification d'accès sur le terminal a échoué.

7. Procédé selon la revendication 1, dans lequel, après l'envoi (S507, S605) d'un premier paquet à chacun de multiples serveurs d'authentification, le procédé comprend en outre :
en réponse à la détermination que des huitièmes paquets envoyés par un troisième nombre de serveurs d'authentification sont reçus dans une seconde durée prédéfinie et qu'un résultat d'authentification transporté par chacun des huitièmes paquets indique que l'authentification d'accès sur le terminal a échoué, l'enregistrement, respectivement, de résultats d'authentification du troisième nombre de serveurs d'authentification pour le terminal en tant qu'échec de l'authentification d'accès ;
en réponse à la détermination que des paquets envoyés par un quatrième nombre de serveurs d'authentification parmi les multiples serveurs d'authentification n'ont pas été reçus après l'expiration de la seconde durée prédéfinie, l'enregistrement, respectivement, de résultats d'authentification du quatrième nombre de serveurs d'authentification pour le terminal en tant que serveur d'authentification inaccessible ; et
l'envoi d'un neuvième paquet ou d'un dixième paquet au terminal, dans lequel le neuvième paquet est utilisé pour indiquer que l'authentification d'accès sur le terminal a échoué, et le dixième paquet est utilisé pour indiquer que l'authentification d'accès sur le terminal a réussi, et une somme du troisième nombre et du quatrième nombre est égale au nombre des multiples serveurs d'authentification.

8. Procédé selon la revendication 1, dans lequel le septième paquet comprend un attribut EAP-Message, et l'attribut EAP-Message est utilisé pour transporter le paquet EAP.

9. Procédé selon la revendication 8, dans lequel l'attribut EAP-Message a une longueur prédéfinie ; et
en réponse à la détermination que la longueur du paquet EAP est supérieure à la longueur prédéfinie, le septième paquet comprend de multiples attributs EAP-Message, et le paquet EAP est transporté dans les multiples attributs EAP-Message sous forme de fragmentation.

10. Procédé selon la revendication 1, dans lequel le dispositif d'accès est connecté à de multiples ensembles de serveurs d'authentification ; et l'envoi (S507, S605) d'un premier paquet à chacun de multiples serveurs d'authentification comprend :
la sélection d'un ensemble de serveurs d'authentification parmi les multiples ensembles de serveurs d'authentification selon un mode de répartition de charge, et l'envoi du premier paquet à l'ensemble sélectionné de serveurs d'authentification ; ou,
la sélection d'un nombre prédéfini de serveurs d'authentification dans chaque ensemble des multiples ensembles de serveurs d'authentification, respectivement, selon un mode de répartition de charge, et l'envoi du premier paquet aux serveurs d'authentification sélectionnés.

11. Dispositif d'accès, dans lequel le dispositif d'accès comprend :
un processeur (1001) ;
un émetteur-récepteur (1004) ;
un support de stockage lisible par machine (1002) contenant des instructions exécutables par machine stockées sur celui-ci, dans lequel les instructions exécutables par machine peuvent être exécutées par le processeur (1001) pour amener le processeur (1001) à réaliser les procédés selon l'une des revendications 1 à 10.

12. Support de stockage lisible par machine (1002) contenant des instructions exécutables par machine stockées sur celui-ci, dans lequel les instructions exécutables par machine, lorsqu'elles sont appelées et exécutées par un processeur (1001), amènent le processeur (1001) à réaliser le procédé selon l'une des revendications 1 à 10.

13. Produit de programme informatique, dans lequel le produit de programme informatique amène un processeur (1001) à exécuter le procédé selon l'une des revendications 1 à 10.
